# EUROPÄISCHE PATENTSCHRIFT

(11) **EP 3 184 882 B1**
(45) Veröffentlichungstag und Bekanntmachung des Hinweises auf die Patenterteilung: **19.06.2019**
(21) Anmeldenummer: 16205038.9
(22) Anmeldetag: 19.12.2016
(51) Int. Cl.: F21S 8/02, F21V 17/02, F21V 17/10, F21V 21/04, F21V 21/096, F21V 21/14, H02G 3/20, F21V 23/00, F21V 14/02, F21V 15/01

(54) **BELEUCHTUNGSANORDNUNG, SOWIE VERFAHREN ZUM AUFBAU EINER BELEUCHTUNGSANORDNUNG**
LIGHTING ASSEMBLY AND METHOD FOR CONSTRUCTING A LIGHTING ASSEMBLY
SYSTÈME D'ÉCLAIRAGE ET PROCÉDÉ DE MONTAGE D'UN SYSTÈME D'ÉCLAIRAGE

(30) Priorität: 23.12.2015 DE 102015226625
(43) Veröffentlichungstag der Anmeldung: 28.06.2017
(73) Patentinhaber: H4X e.U., 8055 Graz (AT)
(72) Erfinder: Hierzer, Andreas, 8010 Graz (AT)
(74) Vertreter: Isarpatent

(56) Entgegenhaltungen:
- CN-A- 104 428 580
- DE-A1-102010 040 892
- DE-U1- 29 515 221
- US-A1- 2006 138 293
- US-A1- 2009 086 478
- US-A1- 2010 165 646
- US-A1- 2012 068 621
- US-A1- 2015 300 612
- Mag Daddy Magnetic Fasteners: "Information Technology Solutions Large Magnetic Zip Tie Holder RES-62416-W / RES-62416-B", , 3. August 2011 (2011-08-03), XP055350951, www.cableorganizer.com Gefunden im Internet: URL:http://www.cableorganizer.com/images/m agnetic-cable-clips/cable-holder-specifica tions.pdf [gefunden am 2017-03-02]

## Beschreibung

### GEBIET DER ERFINDUNG

Die Erfindung betrifft Beleuchtungsanordnungen, sowie ein Verfahren zum Aufbau einer Beleuchtungsanordnung.

### TECHNISCHER HINTERGRUND

Sowohl in privaten Wohnräumen, als auch in Geschäftsräumen, Ausstellungsräumen, Verkaufsräumen, und vielen weiteren Räumlichkeiten, wird häufig angestrebt, einen bestimmten Raumbereich, oder mehrere bestimmte Raumbereiche, in dem Raum befindliche Gegenstände, an einer Wand des Raums aufgehängte Objekte oder architektonische Merkmale des Raums gezielt zu beleuchten. Hierzu kommen oftmals in herkömmlicher Weise zum Beispiel an einer Decke des Raums befestigte Strahler zum Einsatz, die auf den gewünschten Raumbereich oder das gewünschte Objekt ausgerichtet werden. Je nach Betrachtungsrichtung kann ein sich in dem Raum befindender Betrachter jedoch durch derartige herkömmliche Strahler geblendet werden oder zumindest die direkt sichtbare Lichtquelle als unschön oder störend empfinden.

Es soll eine verbesserte Beleuchtungsanordnung vorgeschlagen werden, die solcherlei Nachteile zumindest weitgehend vermeidet.

Die US 2015/0300612 A1 beschreibt eine Leuchte, bei der sich die Position einer oder mehrerer Lichtquellen einstellen lassen soll. Ein einstellbares Halterungselement kann um eine erste Achse rotiert werden. Eine Schwenkplatte ist mit dem Halterungselement verbunden und kann um eine von der ersten Achse verschiedene zweite Achse rotiert werden. Mit der Schwenkplatte ist ein Lampenhalter verbunden. In einer unteren Wand eines Gehäuses ist eine Öffnung vorgesehen, um Licht aus dem Gehäuse heraus ausstrahlen zu können.

Eine LED-Leuchte mit einer Lichtquellenanordnung und einer Wärmeübertragungsanordnung wird in der CN 104 428 580 A beschrieben, wobei die Lichtquellenanordnung mit der Wärmeübertragungsanordnung magnetisch gekoppelt ist und eine Bewegung der Lichtquellenanordnung relativ zu der Wärmeübertragungsanordnung möglich ist.

Ein Regal mit an Regalböden befestigten Leuchtmitteln zur Ausleuchtung von Waren auf Warenauflagen der Regalböden beschreibt die DE 295 15 221 U1. Es ist eine Fuge für den Durchtritt eines Anschlusskabels des Leuchtmittels vorgesehen, wobei die Fuge durch eine an einer Klappe befestigte Borstenleiste verschlossen ist.

### ZUSAMMENFASSUNG DER ERFINDUNG

Vor diesem Hintergrund liegt der Erfindung die Aufgabe zugrunde, eine verbesserte Beleuchtungsanordnung anzugeben, die günstige Entblendungseigenschaften aufweist und dem Anwender hohe Flexibilität in der angestrebten Beleuchtung von Objekten und/oder Raumbereichen bietet. Zudem soll ein verbessertes Verfahren zum Aufbau einer Beleuchtungsanordnung angegeben werden.

Erfindungsgemäß wird diese Aufgabe durch eine Beleuchtungsanordnung mit den Merkmalen des Patentanspruchs 1 und/oder durch eine Beleuchtungsanordnung mit den Merkmalen des Patentanspruchs 15 und/oder durch ein Verfahren mit den Merkmalen des Patentanspruchs 12 gelöst.

Eine Idee der vorliegenden Erfindung besteht darin, die Anordnung der Lichtbereitstellungseinrichtung innerhalb des Innenraums des Gehäuses und ein Herausleuchten oder Herausstrahlen mittels Abgabe von Licht durch den Lichtaustrittsbereich nach außen mit einer freien Positionierbarkeit der Lichtbereitstellungseinrichtung innerhalb des Innenraums, oder zumindest innerhalb eines Bereichs des Innenraums, zu kombinieren. Die freie Positionierbarkeit der Lichtbereitstellungseinrichtung macht es möglich, die Lichtbereitstellungseinrichtung genau in der gewünschten, zum Beispiel aus ästhetischen Gründen angestrebten Weise durch den Lichtaustrittsbereich hinausleuchten zu lassen. Dies kann auch vorteilhaft sein, wenn sich innerhalb einer Räumlichkeit die Anordnung der zu beleuchtenden Objekte beispielsweise nach einiger Zeit verändert. Somit wird eine hochflexible Beleuchtungsmöglichkeit geschaffen, die zusätzlich, durch die Anordnung der Lichtbereitstellungseinrichtung in dem Innenraum und das Herausleuchten durch den Lichtaustrittsbereich, vorteilhafte Entblendungseigenschaften aufweist.

Eine weitere Idee der Erfindung besteht darin, dass, wenn ein Gehäuse mit einem Innenraum und einem Lichtaustrittsbereich mit einem Durchgang versehen wird und der Durchgang mit Hilfe von Haaren, Fasern oder Borsten einer Bürste abgedeckt wird, eine Leitung, beispielsweise eine elektrische Leitung, vorteilhaft in der Weise aus dem Innenraum herausgeführt werden kann, dass der Anwender in seiner Flexibilität bei der Anordnung und Ausrichtung einer Lichtbereitstellungseinrichtung nicht eingeschränkt wird und dennoch der Durchgang durch die Haare, Fasern oder Borsten der Bürste auch bei hindurchgeführter Leitung zumindest weitgehend lichtdicht verschlossen ist. Hierdurch kann ebenfalls eine hochflexible Beleuchtungslösung geschaffen werden, bei der ferner ein unerwünschter Austritt von Licht aus dem Innenraum durch einen zur Leitungsdurchführung vorgesehenen Durchgang vermieden werden kann.

Vorteilhafte Ausgestaltungen und Weiterbildungen ergeben sich aus den Unteransprüchen sowie aus der Beschreibung unter Bezugnahme auf die Figuren der Zeichnung.

In einer Ausgestaltung ist vorgesehen, dass zur Befestigung der Lichtbereitstellungseinrichtung am Gehäuse an verschiedenen Orten innerhalb des Innenraums die Lichtbereitstellungseinrichtung mittels Magnetkraft mit einem Bestandteil des Gehäuses koppelbar ist.

Insbesondere kann in einer Ausgestaltung die Lichtbereitstellungseinrichtung für die Kopplung mit dem Gehäuse an mindestens einem Innenoberflächenbereich des Gehäuses magnetisch haftend befestigbar sein. Auf diese Weise gelingt eine besonders einfache, wirkungsvolle und flexible Befestigung der Lichtbereitstellungseinrichtung innerhalb des Innenraums, derart, dass die Lichtbereitstellungseinrichtung frei positioniert werden kann.

In einer Ausgestaltung weist die Lichtbereitstellungseinrichtung mindestens einen Magneten, insbesondere einen Permanentmagneten, auf, mittels dem die Kopplung der Lichtbereitstellungseinrichtung mit dem Gehäuse ermöglicht ist.

In einer bevorzugten Ausgestaltung ist das Gehäuse als ein Einbaugehäuse ausgebildet und derart eingerichtet, dass das Gehäuse in eine hierfür vorgesehene Aussparung in einer Decke einsetzbar und in der Aussparung befestigbar ist. Ein solches Gehäuse kann von außen weitgehend unsichtbar hinter einer abgehängten Decke verborgen werden, wobei von der Außenseite, also der einer Räumlichkeit zugewandten Seite der Decke, lediglich der Lichtaustrittsbereich zu sehen ist. Eine dezente und ästhetische Beleuchtungslösung wird hierdurch möglich, wobei jedoch die Flexibilität für den Anwender hinsichtlich der zu beleuchtenden Gegenstände oder Raumbereiche voll erhalten bleibt, auch wenn das Einbaugehäuse dauerhaft in die Decke eingebaut und auf der Sichtseite zum Beispiel eingespachtelt wird.

Bei einer der erfindungsgemäßen Beleuchtungsanordnungen und in einer Ausgestaltung weist das Gehäuse ein Gehäuseteil mit Decken- und Wandabschnitten sowie mit einem offenen Ende auf. Hierbei weist das Gehäuse ferner ein im Bereich des offenen Endes des Gehäuseteils mit dem Gehäuseteil gekoppeltes Element auf. Das Element ist mit dem Lichtaustrittsbereich versehen, und der Lichtaustrittsbereich ist kleiner als das offene Ende des Gehäuseteils. Die Lichtbereitstellungseinrichtung oder mehrere Lichtbereitstellungseinrichtungen kann bzw. können auf diese Weise besonders dezent zwischen dem Element und dem Gehäuseteil in dem Innenraum "versteckt" werden, wobei dennoch eine gezielte, gerichtete Abgabe von Licht durch den Lichtaustrittsbereich hindurch erhalten bleibt.

Bei einer der erfindungsgemäßen Beleuchtungsanordnungen und in einer Weiterbildung ist die Lichtbereitstellungseinrichtung mittels Magnetkraft mit dem Gehäuseteil koppelbar. Vorzugsweise wird hierbei das Gehäuseteil mit einem Material ausgebildet, das eine derartige Kopplung ermöglicht, während das Element vorteilhaft aus anderen Materialien gefertigt werden kann.

Das Element kann in einer Ausgestaltung insbesondere einen lichtundurchlässigen Körper aufweisen, der mit einem Ausschnitt versehen ist, welcher den Lichtaustrittsbereich bildet oder beinhaltet.

Das Gehäuseteil kann in einer Ausgestaltung kastenartig ausgebildet sein, beispielsweise als ein quaderförmiger Kasten mit einer offenen Seite.

In einer Ausgestaltung sind die Wand- und/oder Deckenabschnitte des Gehäuseteils, und insbesondere die Innenoberflächenbereiche des Gehäuseteils im Bereich der Wand- und/oder Deckenabschnitte desselben, im Wesentlichen eben. Eine solche Ausgestaltung erleichtert das Halten der mindestens einen Lichtbereitstellungseinrichtung mittels Magnetkraft.

Insbesondere kann in einer Ausgestaltung das Gehäuseteil als ein Blechteil ausgebildet sein, zum Beispiel aus Stahlblech.

In einer weiteren Weiterbildung kann das Element als ein Gipsteil ausgeführt sein oder zumindest der lichtundurchlässige Körper des Elements als ein Gipsteil ausgebildet sein.

In einer Weiterbildung weist die Beleuchtungsanordnung mehrere Lichtbereitstellungseinrichtungen auf, wobei jede der Lichtbereitstellungseinrichtungen mindestens innerhalb eines Bereichs des Innenraums frei positionierbar ist. Insbesondere kann die Beleuchtungsanordnung beispielsweise zwei, drei oder vier Lichtbereitstellungseinrichtungen aufweisen. Auf diese Weise können mittels der Beleuchtungsanordnung zum Beispiel mehrere Objekte an verschiedenen Stellen zugleich beleuchtet werden. Die mehreren Lichtbereitstellungseinrichtungen werden hierzu vorzugsweise derart innerhalb des Innenraums angeordnet, dass sie jeweils im Betrieb Licht durch den Lichtaustrittsbereich nach außen abgeben können. Die Beleuchtung mehrerer Gegenstände oder Raumbereiche gelingt somit auf flexible und zudem dezente Weise. Jedoch ist es ebenso denkbar, dass bei der Beleuchtungsanordnung genau eine Lichtbereitstellungseinrichtung innerhalb des Innenraums angeordnet wird. Die mehreren Lichtbereitstellungseinrichtungen können insbesondere in gleicher Weise mit dem Gehäuse koppelbar sein. In einer weiteren Ausgestaltung können die mehreren Lichtbereitstellungseinrichtungen insbesondere jeweils in gleicher Weise ausgebildet sein.

Gemäß einer Ausgestaltung weist die Lichtbereitstellungseinrichtung eine weiche Komponente auf, welche beim Koppeln der Lichtbereitstellungseinrichtung mit dem Gehäuse in Kontakt mit dem Gehäuse gelangt. Insbesondere kann die weiche Komponente als ein Filzelement ausgebildet sein. Die weiche Komponente trägt zur Geräuschminderung beim Koppeln der Lichtbereitstellungseinrichtung mit dem Gehäuse bei, und kann auch dazu beitragen, die Innenoberflächen des Gehäuses vor oberflächlichen Beschädigungen, beispielsweise durch Zerkratzen, zu schützen. Zudem wird auch ein Positionieren und ein Variieren der Positionierung beschädigungsfrei und geräuscharm möglich.

Zusätzlich zu der freien Positionierbarkeit der Lichtbereitstellungseinrichtung ist in einer Weiterbildung die Lichtbereitstellungseinrichtung ferner ausrichtbar und/oder verstellbar. Insbesondere kann diese Ausrichtbarkeit und/oder Verstellbarkeit zur Veränderung einer Abstrahlrichtung der Lichtbereitstellungseinrichtung nach Bedarf vorgesehen sein. Auf diese Weise kann die Flexibilität mit Blick auf die Beleuchtung unterschiedlichster Objekte oder die Erzielung gewünschter ästhetischer Beleuchtungseffekte noch weiter verbessert werden. Die Lichtbereitstellungseinrichtung kann hierzu beispielsweise einen schwenkbaren Funktionsabschnitt aufweisen.

In einer Ausgestaltung beinhaltet die Lichtbereitstellungseinrichtung eine Lichtquelle mit einem mittelengen oder bevorzugt engen Ausstrahlwinkel. Beispielsweise kann der Ausstrahlwinkel der Lichtquelle bis zu einschließlich etwa 20 Grad betragen, wobei der Ausstrahlwinkel zum Beispiel zwischen etwa 6 Grad und etwa 20 Grad liegen kann. In einer Variante wäre es denkbar, dass die Lichtquelle einen Ausstrahlwinkel von maximal 15 Grad aufweist. Die Verwendung insbesondere engstrahlender Lichtquellen ermöglicht eine gezielte Abgabe von Licht durch den Lichtaustrittsbereich nach außen, um dort gezielt einen Raumbereich oder einen Gegenstand anzuleuchten. Ein ungewolltes Ausleuchten des Gehäuseinnenraums durch die Lichtquelle der Lichtbereitstellungseinrichtung wird vermieden.

In einer vorteilhaften Ausgestaltung weist die Beleuchtungsanordnung ferner mindestens eine zusätzliche Lichtquelle auf, die dafür angeordnet und ausgebildet ist, um Licht in den Innenraum abzugeben und insbesondere hierdurch das Gehäuse zu hinterleuchten. Auf diese Weise kann ein besonders interessanter ästhetischer Effekt erzielt werden, indem der Lichtaustrittsbereich nicht nur das Anstrahlen etwa von im Raum befindlichen Objekten durch den Lichtaustrittsbereich hindurch ermöglicht, sondern der Innenraum auch selbst den Eindruck erweckt, zu leuchten. Mit einem als Loch in dem Element ausgebildeten Lichtaustrittsbereich kann der Eindruck eines leuchtenden Lichtaustrittslochs erreicht werden ("glowing").

Insbesondere kann in einer Ausgestaltung die zusätzliche Lichtquelle dem Innenraum zugewandt in einem Rücksprung des Elements angeordnet sein, wodurch sich ein Körperabschnitt des Elements zwischen dem Lichtsaustrittsbereich und der zusätzlichen Lichtquelle befindet. Somit kann die zusätzliche Lichtquelle von der Sicht- oder Außenseite her nicht eingesehen werden, was den ästhetischen Effekt der Hinterleuchtung bzw. des "glowing" noch verbessert.

Die zusätzliche Lichtquelle kann in einer Ausgestaltung mit mindestens einer LED oder einer LED-Anordnung gebildet sein.

Bei einer der erfindungsgemäßen Beleuchtungsanordnungen und gemäß einer Weiterbildung ist das Gehäuse mit einem Durchgang ausgestattet, der dafür eingerichtet ist, mindestens eine zur Versorgung der Lichtbereitstellungseinrichtung dienende Leitung aus dem Innenraum herauszuführen. Bei dieser Ausgestaltung weist die Beleuchtungsanordnung eine Bürste auf, deren Haare oder Fasern oder Borsten in dem Durchgang angeordnet sind und/oder den Durchgang mindestens abschnittsweise überdecken. Auf diese Weise wird es möglich, die zur Versorgung der Lichtbereitstellungseinrichtung dienende Leitung, beispielsweise ein elektrisches Kabel, aus dem Innenraum herauszuführen, ohne die Flexibilität der Positionierung der Lichtbereitstellungseinrichtung innerhalb des Innenraums zu beeinträchtigen. Nicht benötigte Leitungsabschnitte können also auf einfache Weise durch den Durchgang aus dem Gehäuse geschoben oder zusätzlich benötigte Länge leicht nachgezogen werden. Zudem wird ein Lichtaustritt durch den Durchgang mit Hilfe der Haare, Fasern oder Borsten vermieden. Vorzugsweise sind die Haare, Fasern oder Borsten der Bürste derart angeordnet, dass, ggf. im Zusammenspiel mit einem Grundkörper der Bürste, der Durchgang komplett abgedeckt ist.

Auch dadurch, dass bei einer der erfindungsgemäßen Beleuchtungsanordnungen und gemäß einer Ausgestaltung der Erfindung vorgesehen ist, dass die Beleuchtungsanordnung eine zur Versorgung der Lichtbereitstellungseinrichtung vorgesehene Leitung aufweist, wobei diese Leitung derart ausgebildet ist, dass sie magnetisch mit einem Bestandteil des Gehäuses gekoppelt und hierdurch innerhalb des Innenraums gehalten und/oder geführt werden kann, kann wiederum zur flexiblen, freien Positionierbarkeit der Lichtbereitstellungseinrichtung beigetragen werden, denn durch die magnetische Kopplung der Leitung mit dem Gehäuse und die dadurch erzielte Führung der Leitung kann diese, je nach Positionierung der Lichtbereitstellungseinrichtung, genau dort angeordnet und gehalten werden, wo sie am wenigsten stört. Insbesondere wird vermieden, dass die Leitung in den von der Lichtbereitstellungseinrichtung bereitgestellten Lichtkegel oder Lichtstrahl hineinhängt. Auf diese Weise wird auch die Anordnung mehrerer Lichtbereitstellungseinrichtungen innerhalb des Innenraums und deren Positionierung erheblich erleichtert.

Die Versorgungsleitung für die Lichtbereitstellungseinrichtung kann insbesondere ein Kabel zur Versorgung der Lichtbereitstellungseinrichtung mit elektrischem Strom sein. Im Falle mehrerer Lichtbereitstellungseinrichtungen kann jede dieser eine eigene derartige Versorgungsleitung aufweisen.

In einer Ausgestaltung kann die Leitung für die magnetische Kopplung mit dem Bestandteil des Gehäuses mit einem Mantel versehen sein, der eine oder mehrere magnetische Komponenten enthält, oder die Leitung kann entlang der Längserstreckung mit einem oder mehreren magnetischen Halteelementen versehen sein.

Bei dem erfindungsgemäßen Verfahren wird die Lichtbereitstellungseinrichtung mittels Magnetkraft mit einem Bestandteil des Gehäuses gekoppelt. Die Vorteile der Kopplung mittels Magnetkraft wurden oben bereits genannt.

In einer Ausgestaltung umfasst das Verfahren ferner ein Justieren der Lichtbereitstellungseinrichtung durch gleitendes Verschieben und/oder Verdrehen der Lichtbereitstellungseinrichtung an dem Gehäuse. Hierdurch kann das Justieren auf besonders einfache und flexible Weise erfolgen.

In einer Weiterbildung des Verfahrens erfolgt das Einbringen der Lichtbereitstellungseinrichtung in den Innenraum, das Koppeln derselben mit dem Gehäuse, sowie das Positionieren der Lichtbereitstellungseinrichtung durch einen Ausschnitt, der den Lichtaustrittsbereich bildet oder beinhaltet, hindurch, insbesondere nachdem das Gehäuse im Bereich einer Decke montiert ist. Dies ist von Vorteil, da beim Einbau des Gehäuses noch nicht festgelegt werden muss, wieviele Lichtbereitstellungseinrichtungen in dem Innenraum aufgenommen werden sollen, und wie diese ausgerichtet werden sollen. Ein hochflexibler Aufbau der Beleuchtungsanordnung wird auf diese Weise möglich.

Erfindungsgemäß umfasst das Verfahren ferner ein Anordnen einer zur Versorgung der Lichtbereitstellungeinrichtung vorgesehenen Leitung innerhalb des Innenraums und ein magnetisches Koppeln der Leitung mit einem Bestandteil des Gehäuses zum Halten der Leitung innerhalb des Gehäuses. Die Vorteile einer derartigen magnetischen Kopplung wurden ebenfalls oben bereits genannt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird hierbei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die Erfindung wird nachfolgend anhand der in den Figuren der Zeichnungen angegebenen Ausführungsbeispiele näher erläutert. Hierbei zeigen:
- Figur 1: eine Beleuchtungsanordnung gemäß einem ersten Ausführungsbeispiel der Erfindung, perspektivisch von einer mit einem Lichtaustrittsbereich versehenen Seite eines Gehäuses her gesehen;
- Figur 2: die Beleuchtungsanordnung der Figur 1 perspektivisch von einer Seite des Gehäuses gesehen, die dem Lichtaustrittsbereich gegenüberliegt;
- Figur 3: eine perspektivische Schnittdarstellung durch eine Beleuchtungsanordnung gemäß dem ersten Ausführungsbeispiel, welche zwei gleichartig ausgeführte Lichtbereitstellungseinrichtungen aufweist;
- Figur 4: eine perspektivische Schnittdarstellung durch eine Beleuchtungsanordnung gemäß einem zweiten Ausführungsbeispiel der Erfindung, wobei lediglich eine Lichtbereitstellungseinrichtung vorgesehen ist;
- Figur 5: eine perspektivische Darstellung einer Lichtbereitstellungseinrichtung;
- Figur 6: ein Mittelschnitt durch die Lichtbereitstellungseinrichtung der Figur 5;
- Figur 7: eine perspektivische Schnittdarstellung der Lichtbereitstellungseinrichtung der Figur 5;
- Figur 8: eine Explosionsansicht der Lichtbereitstellungseinrichtung der Figur 5;
- Figur 9: eine vergrößerte Ansicht eines Basisabschnitts der Lichtbereitstellungseinrichtung der Figur 5;
- Figur 10: eine Beleuchtungsanordnung gemäß einem dritten Ausführungsbeispiel, in einer perspektivischen Ansicht von einer mit dem Lichtaustrittsbereich versehenen Seite des Gehäuses her gesehen;
- Figur 11: eine Kabelbürste in einer Vorderansicht, schematisch;
- Figur 12: eine in einem Durchgang eines Gehäuses angeordnete Kabelbürste, schematisch;
- Figur 13: ein mit einem Lichtaustrittsbereich versehenes Element des Gehäuses des Ausführungsbeispiels der Figur 10, weitere Bauteile des Gehäuses, sowie zusätzliche Lichtquellen, perspektivisch;
- Figur 14: eine perspektivische Schnittdarstellung durch eine Beleuchtungsanordnung gemäß einer Variante des zweiten Ausführungsbeispiels, mit einer Lichtbereitstellungseinrichtung sowie einem magnetisch mit dem Gehäuse gekoppelten Versorgungskabel;
- Figur 15: eine Beleuchtungsanordnung gemäß einer weiteren Variante des zweiten Ausführungsbeispiels, perspektivisch von einer einem zu beleuchtenden Raum abgewandten Seite gesehen, zur schematischen Illustration des elektrischen Anschlusses der Lichtbereitstellungseinrichtung;
- Figur 16: eine magnetisch mit einem Gehäusebestandteil koppelbare, als Kabel ausgeführte Leitung;
- Figur 17: eine magnetisch mit einem Gehäusebestandteil koppelbare, als Kabel ausgeführte Leitung gemäß einer Variante; und
- Figur 18: eine magnetisch mit einem Gehäusebestandteil koppelbare, als Kabel ausgeführte Leitung gemäß einer noch weiteren Variante.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleichwirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

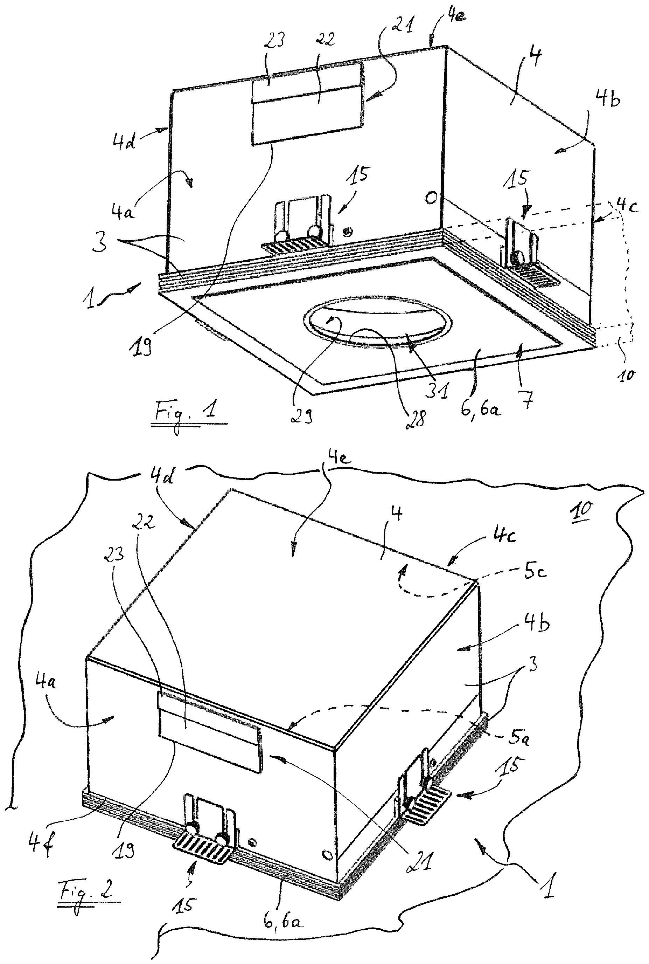

Fig. 1 zeigt eine Beleuchtungsanordnung 1 gemäß einem ersten Ausführungsbeispiel der Erfindung. Die Beleuchtungsanordnung 1 weist ein Gehäuse 3 auf, das mit einem kastenartigen Gehäuseteil 4 und einem plattenartigen Element 6 gebildet ist. Das Gehäuseteil 4 ist quaderförmig ausgebildet und weist Wandabschnitte 4a-4d und einen Deckenabschnitt 4e auf, wodurch das Gehäuseteil 4 an fünf Seiten im Wesentlichen geschlossen ist. Im Bereich der sechsten Seite, in Fig. 1 der Bodenseite des Gehäuseteils 4, ist das Gehäuseteil 4 offen, weist also ein offenes Ende 4f auf. Die sechste Seite des Gehäuseteils 4 ist durch das im Bereich des offenen Endes 4f angeordnete, mit dem Gehäuseteil 4 gekoppelte Element 6 abgeschlossen. Das Element 6 und das Gehäuseteil 4 können hierzu auf geeignete Weise aneinander befestigt sein.

Das Gehäuseteil 4 ist als ein Blechteil ausgebildet und beispielsweise aus Stahlblech gefertigt. Hingegen ist das Element 6 mit einem lichtundurchlässigen Körper 6a ausgeführt, wobei der Körper 6a als ein Gipsteil ausgebildet ist. Das Element 6 kann auf seiner Außenseite 7 zum Beispiel weiß sein.

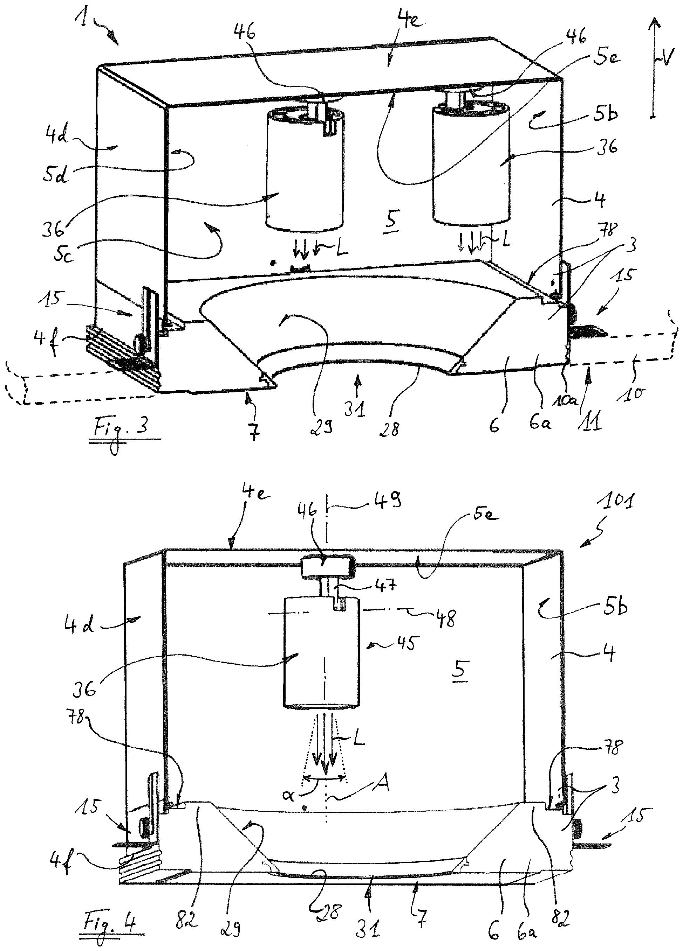

Das Gehäuse 3 ist als ein Einbaugehäuse ausgebildet und dafür vorgesehen, in eine passend dimensionierte Aussparung 10a (siehe Fig. 3) in einer abgehängten Decke 10, insbesondere einer Gipsdecke, eingesetzt und in der Aussparung 10a befestigt zu werden. Um das Gehäuse 3 an der Decke 10 zu halten, weist die Beleuchtungsanordnung 1 an dem Gehäuse 3 Haltemittel 15 auf, die bei dem in den Figuren 1 bis 3 gezeigten ersten Ausführungsbeispiel winkelartig ausgebildet sind.

Es versteht sich jedoch, dass zur Befestigung des Gehäuses 3 in der Decke 10 auch andere dem Fachmann geläufige Befestigungsmittel zum Einsatz kommen könnten. Nach dem Einbau des Gehäuses 3 in die Decke 10 kann etwa im Rahmen von Trockenbauarbeiten ein Verspachteln erfolgen.

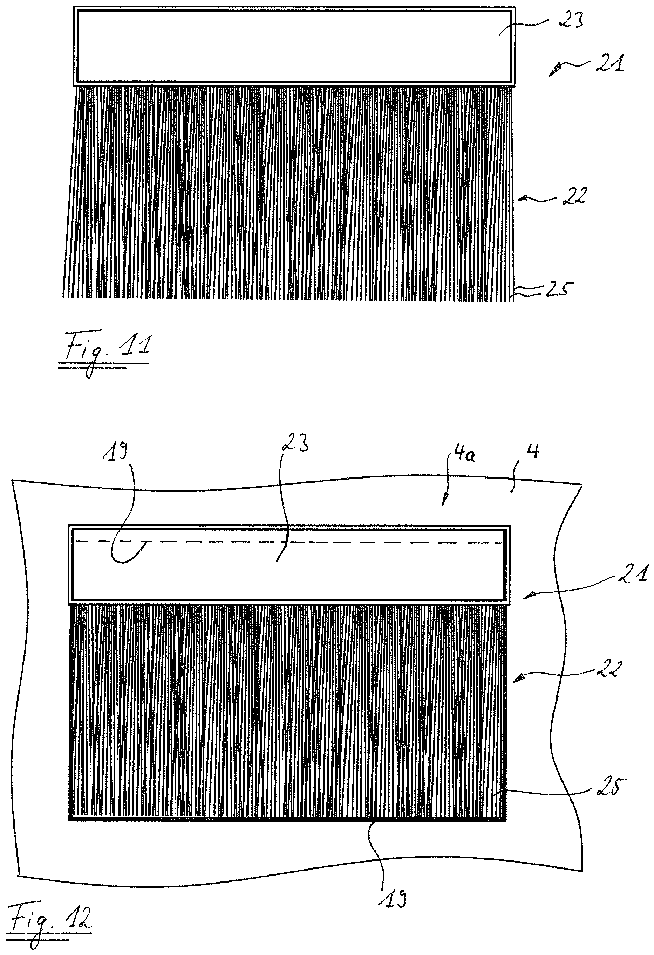

Das plattenartige Element 6 weist bei dem Ausführungsbeispiel der Figuren 1 bis 3 eine rechteckige Form auf, wobei jedoch sowohl die in der Decke 10 vorgesehene Aussparung 10a als auch das Element 6 eine andere geeignete Form aufweisen könnten, zum Beispiel eine andere eckige Form oder eine runde, beispielsweise kreisrunde oder ovale, Form. In den Figuren 1 und 2 ist ferner sichtbar, dass der Wandabschnitt 4a mit einem rechteckigen Durchgang 19 versehen ist. Der Durchgang 19 wird durch eine Kabelbürste 21 mit einem Besatz 22 verschlossen, wobei die Kabelbürste 21 zum Beispiel an einem Rand des Durchgangs 19 befestigt ist und diesen Rand beispielsweise zum Festklemmen der Bürste 21 übergreift. Hierzu kann die Kabelbürste 21 an ihrem Grundkörper 23 beispielsweise eine geeignete Nut aufweisen. Der Besatz 22 ist mit Haaren, Fasern oder Borsten 25 (siehe Fig. 11, 12) gebildet, wobei in den Figuren 1 und 2 die Haare, Fasern oder Borsten 25 des Besatzes 22 in dem Durchgang 19 angeordnet sind und somit den Durchgang 19 zusammen mit dem Grundkörper 23 vollständig überdecken. Die Kabelbürste 21 ermöglicht einen lichtdichten Verschluss des Durchgangs 19, macht es jedoch zugleich möglich, Versorgungsleitungen in Gestalt eines oder mehrerer elektrischer Kabel durch den Durchgang 19 aus dem Gehäuse 3 nach außen zu führen.

Figur 1 zeigt zudem, dass das Element 6 bei dem ersten Ausführungsbeispiel mit einem kreisrunden Ausschnitt 28 in dem Körper 6a versehen ist, welcher ein Loch in dem Körper 6a bildet. Der Ausschnitt 28 dient als ein Lichtaustrittsbereich 31.

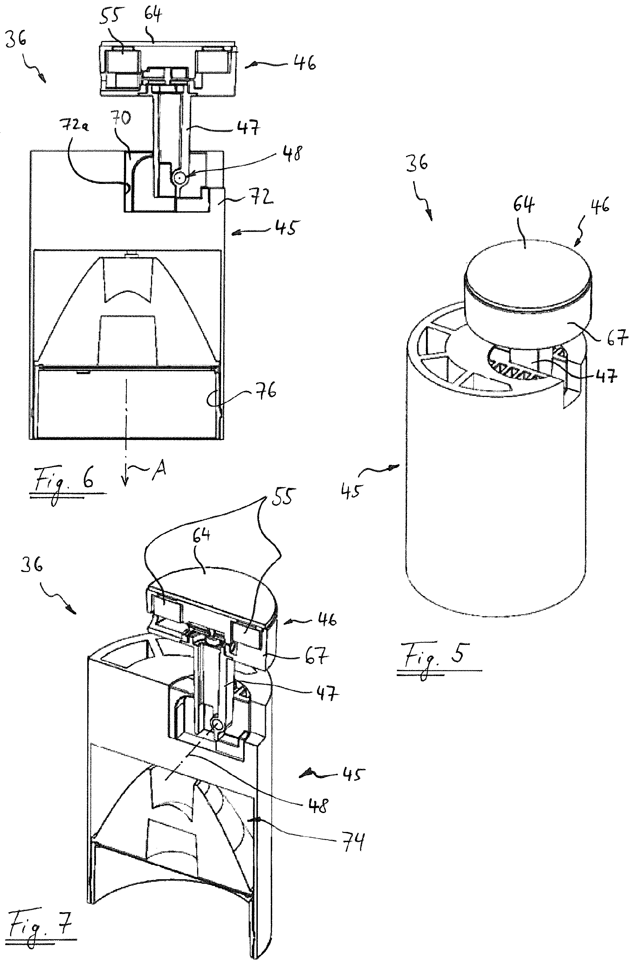

Die Beleuchtungsanordnung 1 gemäß dem ersten Ausführungsbeispiel weist ferner zwei Lichtbereitstellungseinrichtungen 36 auf, die in Fig. 3 sichtbar sind. Die Lichtbereitstellungseinrichtungen 36 sind jeweils in geeigneter Weise dimensioniert und ausgebildet, um innerhalb eines Innenraums 5 des Gehäuses 3 angeordnet zu werden. In der Darstellung der Figur 3 sind beide Lichtbereitstellungseinrichtungen 36 in dem Innenraum 5 angeordnet. Die beiden Lichtbereitstellungseinrichtungen 36 befinden sich hierbei jeweils vollständig innerhalb des Innenraums 5. Bei dem ersten Ausführungsbeispiel sind die Lichtbereitstellungseinrichtungen 36 als engstrahlende Strahler oder "Spots" ausgebildet. Die Lichtbereitstellungseinrichtungen 36 sollen nachfolgend unter Bezugnahme auf die Fig. 5-8 noch näher erläutert werden.

Die Lichtbereitstellungseinrichtungen 36 sind jeweils dafür vorgesehen, im Betrieb Licht L durch den Lichtaustrittsbereich 31 nach außen abzugeben, also gezielt durch den Lichtaustrittsbereich 31 aus dem Innenraum 5 heraus zu leuchten. Auf diese Weise gelingt es, ein außerhalb des Innenraums 5 innerhalb der Räumlichkeit, die die abgehängte Decke 10 aufweist, befindliches Objekt, oder einen Raumbereich, durch den Lichtaustrittsbereich 31 hindurch gezielt anzuleuchten, und zugleich ein besonders günstiges Entblendungsverhalten zu erzielen. Die Lichtbereitstellungseinrichtungen 36 sind von einem Betrachter, der sich in der beleuchteten Räumlichkeit befindet, kaum wahrnehmbar, ermöglichen jedoch dennoch eine gezielte Anleuchtung von ausgewählten Raumbereichen, architektonischen Merkmalen oder in der Räumlichkeit befindlichen Gegenständen. Dies gelingt dadurch, dass die Lichtbereitstellungseinrichtungen 36, von außerhalb des Innenraums 5 gesehen, hinter dem Element 6 in dem Innenraum 5 angeordnet und somit "versteckt" sind, d. h. die Lichtbereitstellungseinrichtungen 36 befinden sich gegenüber einer Ebene 11, die eine Außenseite der Decke 10 bildet, hinter die Decke 10 zurückversetzt.

Eine Lichtbereitstellungseinrichtung 36, wie sie bei dem Ausführungsbeispiel der Fig. 1-3 zum Einsatz kommt, ist in Fig. 5 bis 8 näher dargestellt. Die Lichtbereitstellungseinrichtung 36 weist einen Funktionsabschnitt 45 sowie einen Basisabschnitt 46 auf, wobei der Basisabschnitt 46 über eine Pende 47 mit dem Funktionsabschnitt 45 verbunden ist. Über eine Schwenkachse 48 kann der Funktionsabschnitt 45 gegenüber dem Basisabschnitt 46 verschwenkt werden, zum Beispiel um 90 Grad.

Die Lichtbereitstellungseinrichtung 36 ist als ein Strahler oder "Spot" ausgebildet und weist eine Lichtquelle mit einem engen Ausstrahlwinkel α auf. Bei dem ersten Ausführungsbeispiel beträgt der Ausstrahlwinkel α maximal 20 Grad. Der Ausstrahlwinkel α kann zum Beispiel zwischen 6 Grad und 20 Grad betragen. Indem die Lichtbereitstellungseinrichtung 36 eine engstrahlende Lichtquelle aufweist, kann trotz des Zurückversatzes der Lichtbereitstellungseinrichtung 36 hinter die Ebene 11 in den Innenraum 5 hinein ein Objekt außerhalb des Innenraums 5 durch den Lichtaustrittsbereich 31 hindurch gezielt beleuchtet werden, ohne dass es zu übermäßigen Verlusten durch die Ausleuchtung des Innenraums 5 kommt.

Jede der Lichtbereitstellungseinrichtungen 36 ist mittels des Basisabschnitts 46 mit dem Gehäuse 3 koppelbar. Hierzu weist der Basisabschnitt 46 einen Permanentmagneten 55 auf, der bei dem gezeigten Ausführungsbeispiel als ein Ringmagnet ausgebildet ist. Wie vorstehend beschrieben, ist das Gehäuseteil 4 als ein Blechteil ausgebildet, wobei bei dem ersten Ausführungsbeispiel für das Gehäuseteil 4 ein Blech gewählt ist, auf welches ein Permanentmagnet eine Anziehungskraft ausüben kann. Beispielsweise ist das Gehäuseteil 4 aus Stahlblech gebildet. Bei der kastenartigen, quaderförmigen Ausbildung des Gehäuseteils 4 mit ebenen Wandabschnitten 4a-e sind Wandbereiche 5a, 5b, 5c und 5d sowie ein innerer Deckenbereich 5e der Innenoberfläche des Gehäuseteils 4 eben ausgeführt. In einer bevorzugten Variante sind die Innenoberflächenbereiche 5a-e schwarz gefärbt.

Mittels des in dem Basisabschnitt 46 angeordneten Permanentmagneten 55 kann jede der Lichtbereitstellungseinrichtungen 36 durch Magnetkraft mit dem Gehäuseteil 4 des Gehäuses 3 gekoppelt werden. Hierzu wird die jeweilige Lichtbereitstellungseinrichtung 36 mit ihrem Basisabschnitt 46 an einem der Innenoberflächenbereiche 5a-5e magnetisch haftend befestigt. Der Magnet 55 kann somit die Lichtbereitstellungseinrichtung 36 sowohl an einer der Wände des Gehäuseteils 4 in den Wandbereichen 5a-5d als auch an der Decke des Gehäuseteils 4 in dem Deckenbereich 5e magnetisch haftend halten. Dies wird durch die ebene Gestaltung der Wand- und Deckenbereiche 5a-d, 5e erleichtert, die ein einfaches Anliegen des Basisabschnitts 46 ermöglichen. Jede der Lichtbereitstellungseinrichtungen 36 ist also innerhalb des Innenraums 5 in der Weise frei positionierbar, dass der jeweilige Basisabschnitt 46 an einer beliebigen freien Stelle der Innenoberflächenbereiche 5a-d, 5e magnetisch haftend angekoppelt werden kann, je nach Bedarf (siehe Fig. 3). Es versteht sich, dass Kollisionen zweier Lichtbereitstellungseinrichtungen 36 durch geeignete Anordnung derselben in dem Innenraum 5 vermieden werden können.

Die Lichtbereitstellungseinrichtungen 36, von denen bei dem ersten Ausführungsbeispiel, siehe Figur 3, zwei Stück vorhanden und beide beispielhaft im Deckenbereich 5e mit dem Gehäuseteil 4 gekoppelt sind, können also innerhalb des Innenraums 5, oder zumindest eines Bereichs desselben, frei am Gehäuse 3 positioniert werden. Zudem lassen sich die Lichtbereitstellungseinrichtungen 36, aufgrund der Befestigung mittels der magnetischen Kopplung mit dem Gehäuseteil 4, gleitend am Gehäuseteil 4 verschieben und verdrehen, ohne dass die Position einer Lichtbereitstellungseinrichtung 36 innerhalb des Innenraums 5 auf eine oder mehrere diskrete Positionen beschränkt wäre. Vielmehr sind die Positionen der Lichtbereitstellungseinrichtungen 36 kontinuierlich veränderbar. Somit wird eine große Vielfalt verschiedener Anordnungen mehrerer Lichtbereitstellungseinrichtungen 36 möglich.

Das Element 6 verschließt das offene Ende 4f des Gehäuseteils 4 bis auf den Ausschnitt 28. Der Ausschnitt 28 bildet einen Lichtaustrittsbereich 31, der kleiner als das offene Ende 4f des Gehäuseteils 4 ist. Das Element 6 weist im Körper 6a ferner einen sich erweiternden Bereich 29 auf. Der Bereich 29 erweitert sich ausgehend von dem Ausschnitt 28, und somit ausgehend von der Außenseite 7 des Elements 6, nach innen, also zu dem Innenraum 5 hin. Bei dem ersten Ausführungsbeispiel ist der Ausschnitt 28 kreisrund ausgeführt, und der Bereich 29 erweitert sich nach Art eines Kreiskegelstumpfs nach innen. Auf diese Weise können die Lichtbereitstellungseinrichtungen 36 auch bei größerer Dicke des Körpers 6a, siehe Fig. 3, gegenüber dem Ausschnitt 28 seitlich versetzt hinter Teilbereichen des Elements 6, etwa in der Nähe eines der Wandabschnitte 4a bis 4d, positioniert werden.

Durch Schwenken des Funktionsabschnitts 45 um die Schwenkachse 48 können die Lichtbereitstellungseinrichtungen 36 beispielsweise geneigt zu einer vertikalen Richtung V aus dem Lichtaustrittsbereich 31 herausleuchten. Mittels eines derartigen Verstellens des Funktionsabschnitts 45 kann somit zusätzlich zu der freien Positionierbarkeit der Lichtbereitstellungseinrichtung 36 die Abstrahlrichtung A der Lichtbereitstellungseinrichtung 36 flexibel je nach Bedarf verändert werden.

Ein zweites Ausführungsbeispiel zeigt Figur 4. Die Beleuchtungsanordnung 101 gemäß dem zweiten Ausführungsbeispiel unterscheidet sich von dem ersten Ausführungsbeispiel lediglich darin, dass nur eine Lichtbereitstellungseinrichtung 36 innerhalb des Innenraums 5 angeordnet ist. Wie auch in Fig. 3 befinden sich sowohl der Funktionsabschnitt 45 als auch der Basisabschnitt 46 und die Pende 47 vollständig innerhalb des Innenraums 5. Die einzelne Lichtbereitstellungseinrichtung 36 der Fig. 4 ist, wie jede der Lichtbereitstellungseinrichtungen 36 der Fig. 3, als Ganzes innerhalb des Innenraums 5 positionierbar, an einem gewählten Ort innerhalb des Innenraums 5 magnetisch befestigtbar, und die Lichtbereitstellungseinrichtung 36 ist zudem innerhalb des Innenraums 5 ausrichtbar, zum Beispiel durch Verschwenken des Funktionsabschnitts 45. Ein weiteres Ausrichten kann durch Verdrehen um eine in Fig. 4 vertikale, oberflächennormale Achse 49 durch Gleiten des Basisabschnitts 46 auf dem Deckenabschnitt 5e der Innenoberfläche erfolgen. Eine elektrische Leitung, etwa ein Kabel, die der Versorgung der Lichtbereitstellungseinrichtung 36 dient, soll sich abschnittsweise innerhalb und abschnittsweise außerhalb des Innenraums 5 befinden, ist jedoch in Figur 4 nicht dargestellt. Auch die Lichtbereitstellungseinrichtung 36 der Fig. 4 ist innerhalb des Innenraums 5 frei und beliebig positionierbar, um die Achse 49 verdrehbar und um die Achse 28 schwenkbar ist, so dass Licht L gerichtet durch den Ausschnitt 28 nach außen abgestrahlt werden kann. Die Oberfläche des sich erweiternden Bereichs 29 ist in Fig. 4, und auch in Fig. 3, vorzugsweise schwarz gefärbt.

Der Basisabschnitt 46 ist, siehe Figuren 5 bis 8, von im Wesentlichen zylindrischer äußerer Grundform, wobei der Basisabschnitt 46 auf einer von dem Funktionsabschnitt 45 weg gewandten, ebenen Stirnseite eine weiche Komponente 64 aufweist, die bei dem Ausführungsbeispiel der Fig. 5-8 bevorzugt als eine kreisrunde Filzscheibe ausgebildet ist. Beim Koppeln der Lichtbereitstellungseinrichtung 36 mit dem Gehäuse 3 mittels des Permanentmagneten 55 gelangt die weiche Komponente 64 in Kontakt mit dem Deckenbereich 5e oder einem der Wandbereiche 5a-d der Innenoberfläche des Gehäuseteils 4. Geräusche beim Einsetzen der Lichtbereitstellungseinrichtung 36 in den Innenraum 5 und beim Ankoppeln derselben an das Gehäuse 3, sowie Geräusche und Beschädigungen an den Innenoberflächenbereichen 5a-e des Gehäuseteils 4 beim Verschieben oder Verdrehen des Basisabschnitts 46 im magnetisch an das Gehäuseteil 4 gekoppelten Zustand können durch die weiche Komponente 64 vermieden werden.

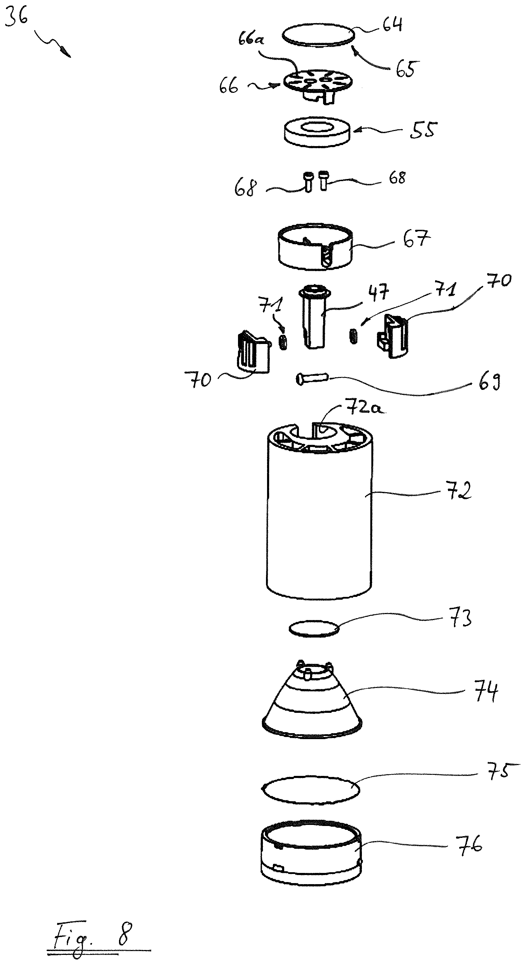

Die Ansicht der Fig. 8 zeigt Einzelteile einer Lichtbereitstellungseinrichtung 36 der Fig. 5-7. Der Basisabschnitt 46 ist gebildet mit einem runden Basisgehäusebauteil 67, das den als Ringmagnet ausgeführten Permanentmagneten 55 aufnimmt. Der Ringmagnet 55 ist in dem Basisgehäusebauteil 67 in Fig. 8 von oben her mittels eines abschnittsweise scheibenartigen, mit Durchbrechungen oder Löchern 66a versehenen Teils 66 geklemmt, wobei das Teil 66, der Magnet 55, das Basisgehäusebauteil 67 und die Pende 47 mittels Schrauben 68 zusammengehalten werden. Das Teil 66 kann zudem am Basisgehäuseteil 67 einschnappen. Das ein leichtes, beschädigungsfreies und geräuscharmes Gleiten ermöglichende weiche Filzelement 64 ist an seiner Unterseite 65 mit dem scheibenartigen Abschnitt des durchbrochenen Teils 66 verklebt. Das Teil 66 kann zum Beispiel aus Kunststoff gefertigt sein, das Basisgehäuseteil 67, die Pende 47 und die Schalenteile 70 zum Beispiel aus Metall, etwa Aluminium. Die Durchbrechungen oder Löcher 66a verbessern die erzielte magnetische Haltewirkung des Magneten 55.

Der Funktionsabschnitt 45 ist gebildet mit einem Kühlkörper 72, einem LED-Modul 73 zur Erzeugung von Licht, einer Optik 74 etwa mit einer Linse und/oder einem Reflektor, einer Folie 75 zum Zwecke der optischen Verbesserung, und ferner einem Entblendring 76. Zur Verbindung des Funktionsabschnitts 45 mittels der Pende 47 mit dem Basisabschnitt 46 sind die Schalenteile 70 in einer Ausnehmung des Kühlkörpers 72 reibschlüssig gehalten, wobei die Schalenteile 70 mit der Pende 47 mittels einer Schraube 69 und Scheiben 71 verbunden sind. Mittels der Schraube 69 wird zudem die Schwenkachse 48 realisiert. Mit Hilfe der Optik 74 wird der bereits genannte enge Ausstrahlwinkel α der Lichtbereitstellungseinrichtung 36 ermöglicht.

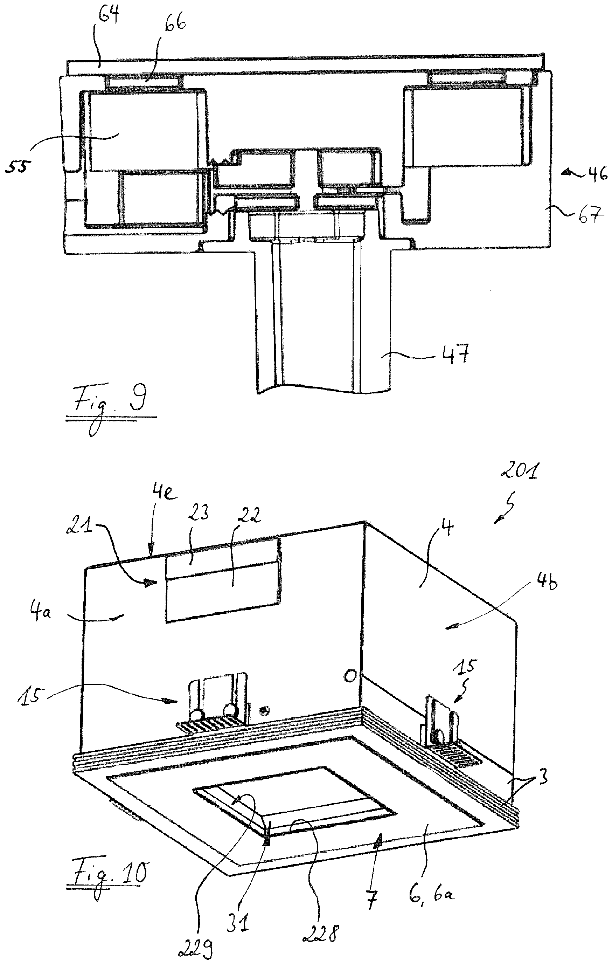

Bei dem dritten Ausführungsbeispiel, wie es in Figur 10 gezeigt ist, weist das Element 6 in dem Körper 6a einen rechteckigen, insbesondere quadratischen, Ausschnitt 228 auf, welcher den Lichtaustrittsbereich 31 bildet. Ein sich nach innen, von der Außenseite 7 des Elements 6 weg erweiternder Bereich 229 ist bei dem dritten Ausführungsbeispiel der Figur 10 pyramidenstumpfartig geformt. Darüber hinausgehend jedoch unterscheidet sich die Beleuchtungsanordnung 201 gemäß dem dritten Ausführungsbeispiel nicht von den Beleuchtungsanordnungen 1 oder 101 gemäß den ersten beiden Ausführungsbeispielen. Auch im Falle der Fig. 10 können eine oder mehrere Lichtbereitstellungseinrichtungen 36 zum Einsatz kommen.

Je nach dem Beleuchtungsbedarf können unterschiedlich viele Lichtbereitstellungseinrichtungen 36 innerhalb des Innenraums 5 angeordnet werden. Bei den hier beschriebenen Ausführungsbeispielen können beispielhaft eine, zwei, drei oder vier Lichtbereitstellungseinrichtungen 36 in dem Innenraum 5 positioniert werden, wobei es denkbar ist, -gegebenenfalls unter Veränderung der relativen Abmessungen des Gehäuses 3 und der Lichtbereitstellungseinrichtungen 36 - eine noch größere Anzahl von Lichtbereitstellungseinrichtungen 36 in dem Innenraum 5 unterzubringen.

Die Figuren 11 und 12 veranschaulichen eine Kabelbürste 21, wie sie bei den hier beschriebenen Ausführungsbeispielen der vorliegenden Erfindung zum Einsatz kommen kann. Gezeigt sind ein Grundkörper 23, sowie ein Besatz 22 mit den Haaren, Fasern oder Borsten 25. Figur 12 zeigt schematisch, wie die Kabelbürste 21 den Durchgang 19 beispielhaft abdecken kann.

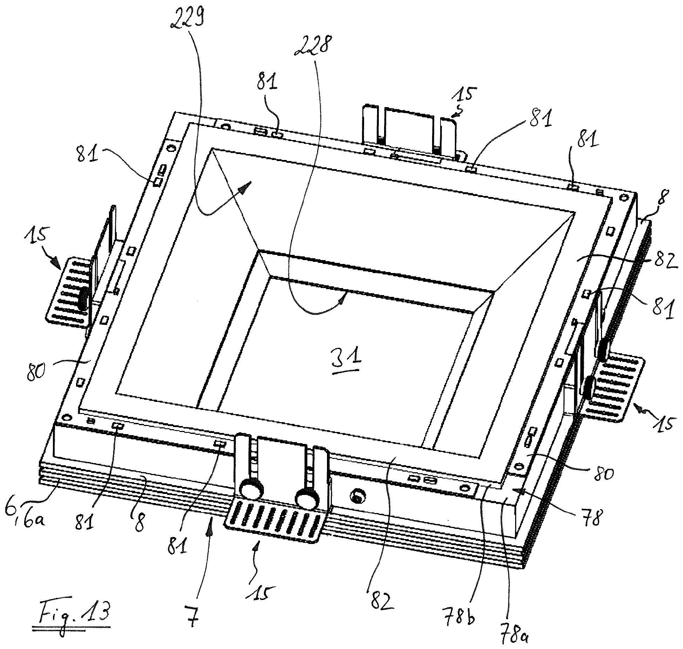

Figur 13 zeigt das Element 6 der Beleuchtungsanordnung 201 gemäß dem dritten Ausführungsbeispiel bei abgenommenem Gehäuseteil 4. Zudem sind die Haltemittel 15 dargestellt. Mit Ausnahme der Form des Ausschnitts 228 und des Bereichs 229 sind die Elemente 6 der Beleuchtungsanordnungen 1 und 101 ebenfalls entsprechend der Figur 13 ausgebildet. Das Element 6 weist einen außenseitigen Absatz 8 auf, auf dem im zusammengebauten Zustand des Gehäuses 3 ein Rand des Gehäuseteils 4 im Bereich des offenen Endes 4f zu liegen kommt. Der Rand des Gehäuseteils 4 im Bereich des offenen Endes 4f ist in entsprechender Weise geeignet geformt. Ferner ist der Körper 6a des Elements 6 mit einem umlaufenden Rücksprung 78 ausgestattet, welcher eine in Umfangsrichtung um das gesamte Element 6 umlaufende Stufe bildet und somit den Lichtaustrittsbereich 31 in Umfangsrichtung umgibt. Die Basisfläche des Rücksprungs 78 ist mit 78a, die nach außen gewandte Seitenfläche mit 78b bezeichnet. Sowohl der Absatz 8 als auch der Rücksprung 78 sind auch bei den Ausführungsbeispielen der Figuren 1 bis 4 vorgesehen. Die Fig. 3, 4 machen deutlich, dass der Rücksprung 78 im zusammengebauten Zustand des Gehäuses 3 unmittelbar an die Wandbereiche 5a bis 5d der Innenoberfläche des Gehäuseteils 4 angrenzt, und somit in dem Bereich, in dem das Gehäuseteil 4 mit dem Element 6 gekoppelt ist, entlang des Gehäuseteils 4 verläuft.

Figur 13 zeigt, dass auf der Basisfläche 78a, in dem durch den Rücksprung 78 gebildeten Raumbereich, zwei Platinen 80 angeordnet sind, wobei jede der Platinen 80 im Wesentlichen die Form eines L mit gleichlangen Schenkeln aufweist. Gemeinsam erstrecken sich die Platinen 80 bei dem Beispiel der Figur 13 fast um den gesamten Umfang des Elements 6 herum, lediglich im Bereich zweier Ecken tritt der Rücksprung 78 hervor. Die Platinen 80 sind in geeigneter Weise an dem Element 6 befestigt. Auf den Platinen 80 sind Leuchtdioden (LEDs) 81 angeordnet, von denen in Figur 13 nur einige mit einem Bezugszeichen versehen sind. Zudem sind auf den Platinen weiterhin Leiterbahnen und gegebenenfalls benötigte weitere elektronische Bauteile für den Betrieb der LEDs 81 angeordnet. Über in Figur 13 nicht gezeigte Anschlussleitungen, beispielsweise Kabel, können die Platinen 80 mit einer geeigneten Stromquelle verbunden werden.

Die Platinen 80 mit den Leuchtdioden 81 bilden somit jeweils eine zusätzliche Lichtquelle. Die Leuchtdioden 81 sind im zusammengebauten Zustand des Gehäuses 3 zu dem Innenraum 5 hin gewandt, und durch die Anordnung der Platinen 80 in dem Rücksprung 78 ist ein Körperabschnitt 82 des Elements 6 zwischen dem Lichtaustrittsbereich 31 und der jeweiligen zusätzlichen Lichtquelle 80 angeordnet. Auf diese Weise gelingt es mittels der zusätzlichen Lichtquellen, die von den Platinen 80 mit den LEDs 81 gebildet werden, den Innenraum 5 des Gehäuses 3 zu hinterleuchten und durch den Lichtaustrittsbereich 31 hindurch den Eindruck eines Leuchtens ("glowing") des Innenraums 5 selbst zu erzeugen. Durch den Körperabschnitt 82 sind die LEDs 81 von der Außenseite her nicht direkt einsehbar.

Die Platinen 80, wie sie vorstehend zu Figur 13 beschrieben sind, können bei allen Ausführungsbeispielen der Erfindung, wie diese vorliegend beschrieben werden, zum Einsatz kommen. Die zusätzlichen Lichtquellen mit den Leuchtdioden 81 ermöglichen es, den Eindruck zu erzeugen, die Lichtbereitstellungseinrichtung 36, welche punktuell auf ein in einer Räumlichkeit befindliches Objekt gerichtet werden kann, leuchte aus einem ebenfalls leuchtenden Loch heraus.

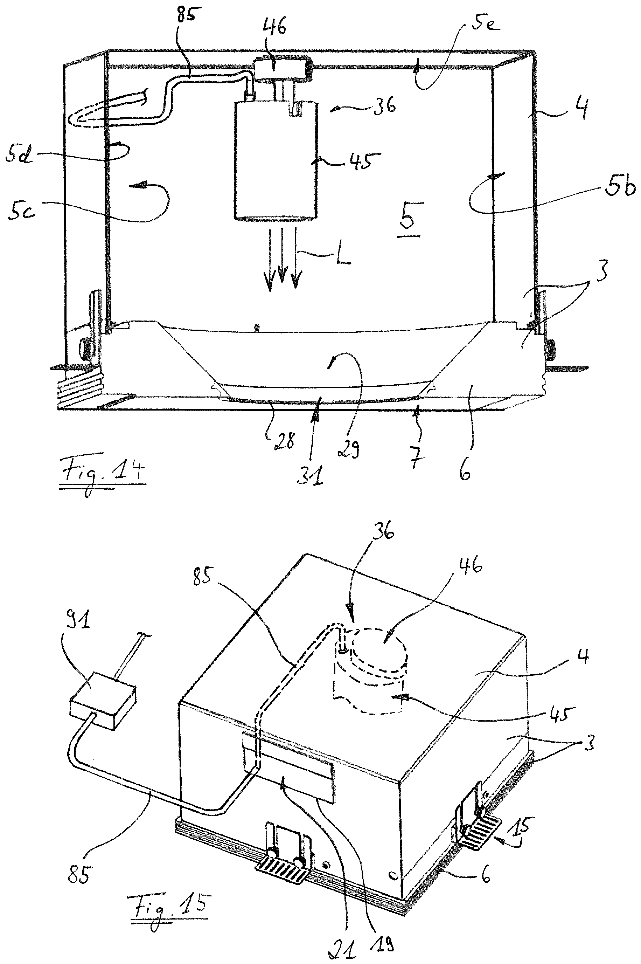

Um jede der Lichtbereitstellungseinrichtungen 36 mit elektrischem Strom versorgen zu können, ist für jede der Lichtbereitstellungseinrichtungen 36 eine Versorgungsleitung 85 vorgesehen, die als elektrisches Kabel ausgebildet ist. Um den Anschluss an das Stromnetz, vermittelt über zusätzliche Einrichtungen wie etwa einen Transformator 91 und je nach Bedarf vorgesehene, in den Figuren nicht gezeigte Schalt- und/oder Steuerungseinrichtungen zu ermöglichen, wird jede der Versorgungsleitungen 85 durch den Durchgang 19, der durch die Kabelbürste 21 abgedeckt ist, aus dem Innenraum 5 herausgeführt. Beispielhaft ist dies in den Fig. 14 und 15 in zwei Varianten des zweiten Ausführungsbeispiels gezeigt, wobei die Versorgungsleitung(en) 85 auch bei den anderen hier beschriebenen Ausführungsbeispielen in analoger Weise angeordnet werden kann. Während die Fig. 14 und 15 jeweils nur eine Lichtbereitstellungseinrichtung 36 zeigen, versteht es sich, dass Versorgungsleitungen 85 für weitere Lichtbereitstellungseinrichtungen 36 in ähnlicher Weise angeordnet werden können.

Die Versorgungsleitung 85 ist derart ausgebildet, dass sie magnetisch mit dem Gehäuse 3, namentlich mit dem ferromagnetischen Gehäuseteil 4, gekoppelt werden kann, wodurch die Leitung 85 an der Innenseite des Gehäuseteils 4 geführt und gehalten wird, ein Durchhängen der Versorgungsleitung 85 vermieden wird, und dadurch auch verhindert wird, dass die Versorgungsleitung 85 in unerwünschter Weise in den von den Lichtbereitstellungseinrichtungen 36 jeweils erzeugten Lichtstrahl oder -kegel hineinhängt.

Figur 15 zeigt, wie beispielhaft die Versorgungsleitung 85 entlang des Innenoberflächenbereichs 5e magnetisch geführt wird, bis sie durch den Durchgang 19 zwischen den Haaren, Borsten oder Fasern 25 der Kabelbürste 21 nach außen treten kann. Die Versorgungsleitung 85 ist in Figur 15 mit dem Transformator 91 verbunden, der seinerseits, unter Zwischenschaltung beispielsweise einer (nicht gezeigten) Schalteinrichtung, mit dem Stromnetz elektrisch verbunden ist.

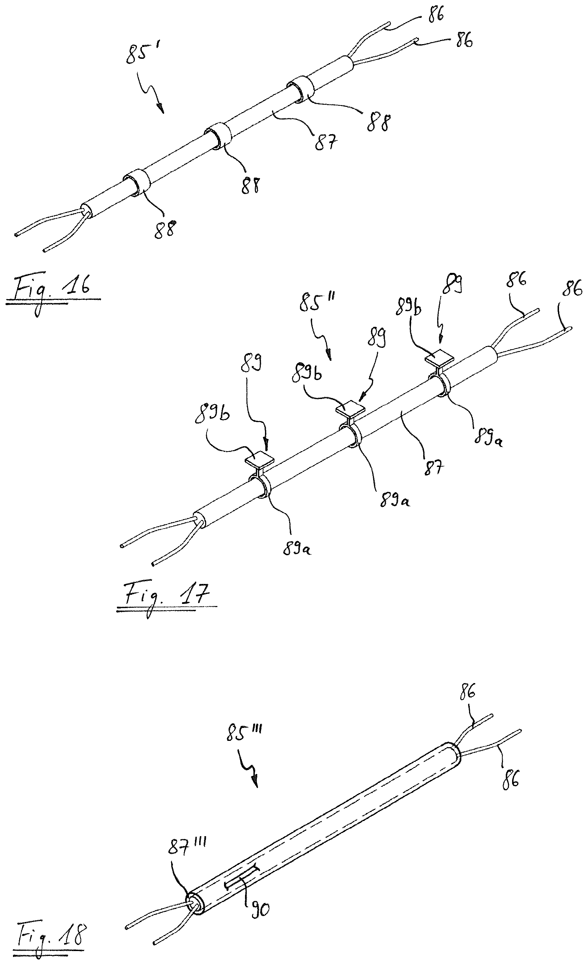

Die Figuren 16, 17 und 18 zeigen verschiedene Varianten, wie die magnetische Kopplung der Versorgungsleitung 85 mit dem Gehäuseteil 4 erfolgen kann, anhand beispielhafter Abschnitte von Leitungen 85', 85", 85"'. Die Versorgungsleitung 85' in Figur 16 weist Leiter 86, einen Mantel 87 sowie den Mantel 87 an dessen Außenseite umgebende, am Mantel 87 befestigte ringartige Halteelemente 88 auf, die ihrerseits magnetisch sind oder in die jeweils ein Permanentmagnet eingebettet ist. Bei der Versorgungsleitung 85" der Figur 17 sind statt der ringartigen Halteelemente Clips 89 mit einem ringartigen Halteabschnitt 89a und einem magnetischen Haftabschnitt 89b ausgebildet. Der Haftabschnitt 89b kann ein Permanentmagnet sein oder es kann in den Haftabschnitt 89b ein Permanentmagnet eingebettet sein. Bei der Variante der Figur 18 ist die Versorgungsleitung 85'" mit einem Mantel 87'" versehen, wobei magnetische Komponenten, in Gestalt kleiner einzelner Magneten, magnetisierter Bänder oder magnetischer Gewebe in den Mantel 87'" eingebettet sein können. In Figur 18 ist lediglich ein Abschnitt eines magnetisierten Bandes 90 beispielhaft dargestellt.

Der Aufbau einer Beleuchtungsanordnung 1, 101, 201 gemäß einem der vorstehend beschriebenen Ausführungsbeispiele erfolgt vorzugsweise in der nachfolgend erläuterten Weise.

Zunächst wird das Gehäuse 3 mit dem Gehäuseteil 4, dem Element 6, der in dem Durchgang 19 angeordneten Kabelbürste 21 und den Haltemitteln 15 bereitgestellt. Die Platinen 80 sind bereits an dem Element 6 befestigt, ein Kabel zu deren Energieversorgung kann durch eine geeignete Öffnung in dem Gehäuseteil 4 beispielsweise aus dem Innenraum 5 herausgeführt sein. Ferner werden eine oder mehrere Lichtbereitstellungseinrichtung(en) 36 bereitgestellt.

Das Gehäuse 3 wird mit Hilfe der Haltemittel 15 in dem Ausschnitt 10a der abgehängten Gipsdecke 10 befestigt, und das Element 6 wird in geeigneter Weise verspachtelt. Vorzugsweise wird hierbei sichergestellt, dass ein Anschluss- oder Netzkabel bereits aus dem Raumbereich oberhalb der abgehängten Decke 10 durch den Durchgang 19 gezogen wurde und in den Innenraum 5 hineinhängt. An dessen Ende kann beispielsweise eine geeignete Steck- oder Klemmverbindung vorgesehen sein. Wenn der Einbau des Gehäuses 3 in die Decke 10 abgeschlossen ist, können in einem nachfolgenden Schritt durch den Ausschnitt 28 bzw. 228 die gewünschte Anzahl an Lichtbereitstellungseinrichtungen 36 nacheinander in den Innenraum 5 eingebracht und jeweils mit dem Gehäuse 3 gekoppelt werden, wie vorstehend beschrieben. Die magnetische Kopplung mittels der Permanentmagneten 55 erlaubt es, die eingebrachten Lichtbereitstellungseinrichtungen 36 frei in dem Innenraum 5 zu positionieren und gleitend am Gehäuse 3 hin und her zu verschieben und zu verdrehen, bis der gewünschte Beleuchtungseffekt durch Lichtabgabe durch den Lichtaustrittsbereich 31 nach außen erreicht werden kann. Weitere Flexibilität ermöglicht das Schwenken um die Schwenkachse 48. Für den Betrieb sind die Lichtbereitstellungseinrichtungen 36 mittels Magnetkraft innerhalb des Innenraums 5 gehalten. Das Einsetzen der Lichtbereitstellungseinrichtungen 36 und deren Anordnen im Innenraum 5, sowie das Koppeln und Justieren können durch den Ausschnitt 28, 228 hindurch erfolgen. Der Transformator 91 wird mit dem heraushängenden Anschlusskabel verbunden, die Versorgungsleitungen 85 der Lichtbereitstellungseinrichtungen 36 werden mit dem Transformator 91 verbunden, und daraufhin kann der Rest des Anschlusskabels zusammen mit dem Transformator 91 und der nicht benötigten Länge an Versorgungsleitung 85 durch den Durchgang 19 gesteckt werden, in den Bereich zwischen der abgehängten Decke 10 und der Rohdecke. Der Durchgang 19 und die Kabelbürste 21 sind derart dimensioniert, dass ein Hindurchstecken des Transformators 91 problemlos möglich ist. Die in dem Innenraum 5 dann verbleibende, benötigte Länge der jeweiligen Versorgungsleitung 85 wird durch magnetisches Anhaften der Leitungen 85 an dem Gehäuseteil 4 innerhalb des Innenraums 5 sauber angeordnet und geführt, ohne durchzuhängen oder zu stören.

Es sei angemerkt, dass bei allen vorstehend beschriebenen Ausführungsbeispielen jede der Lichtbereitstellungseinrichtungen 36 gemäß den Fig. 5-8 ausgebildet sein kann und bevorzugt eine oder mehrere LEDs als Lichtquellen beinhaltet. Es ist aber denkbar, dass die Lichtbereitstellungseinrichtungen 36 Licht auf andere Weise erzeugen, wobei beliebige Leuchtmittel zum Einsatz kommen können. Anstatt von LEDs könnten etwa Glühlampen und/oder Halogenlampen und/oder andere geeignete Leuchtmittel oder Lichtquellen vorgesehen sein.

Obwohl die vorliegende Erfindung vorstehend anhand bevorzugter Ausführungsbeispiele vollständig beschrieben wurde, ist sie nicht darauf beschränkt, sondern auf vielfältige Art und Weise modifizierbar.

Beispielsweise ist die Form des Elements 6, und die Form der Grundfläche des Gehäuseteils 4, jeweils nicht notwendig quadratisch. Das Element 6 könnte beispielsweise stattdessen länglich geformt sein, etwa nach Art eines langgestreckten Rechtecks, kreisrund, oder nach Art einer Ellipse. Das Gehäuseteil 4 könnte ebenfalls als ein eher langgestreckter Quader ausgeführt werden, oder das Gehäuse 4 könnte in einer Variante mit beispielsweise gekrümmten Wandflächen, etwa zylindrisch, ausgeführt werden, beispielsweise, aber nicht notwendig, korrespondierend zur Form des Elements 6. In einem Falle, in dem das Gehäuseteil 4 gekrümmte Wandabschnitte aufweist, kann für ein einfaches Ankoppeln der Lichtbereitstellungseinrichtungen an das Gehäuse vorzugsweise zumindest ein ebener Innenoberflächenbereich 5e an der Decke des Gehäuseteils 4 vorgesehen sein.

Zudem ist die Erfindung nicht auf Elemente 6 mit einem einzigen Ausschnitt, und somit auch nicht auf einen einzigen Lichtaustrittsbereich, beschränkt. Gerade im Falle eher langgestreckter Elemente 6 könnten diese, falls gewünscht, auch mit zwei oder mehr Ausschnitten versehen werden, die dann jeweils einen Lichtaustrittsbereich bilden.

### Bezugszeichenliste

- 1, 101, 201: Beleuchtungsanordnung
- 3: Gehäuse
- 4: Gehäuseteil
- 4a-d: Wandabschnitt
- 4e: Deckenabschnitt
- 4f: offenes Ende
- 5: Innenraum
- 5a-d: Wandbereich der Innenoberfläche
- 5e: Deckenbereich der Innenoberfläche
- 6: Element
- 6a: Körper (Element)
- 7: Außenseite
- 8: Absatz
- 10: Decke
- 10a: Aussparung
- 11: Ebene
- 15: Haltemittel
- 19: Durchgang
- 21: Kabelbürste
- 22: Besatz (Kabelbürste)
- 23: Grundkörper (Kabelbürste)
- 25: Haare/Fasern/Borsten (Kabelbürste)
- 28, 228: Ausschnitt
- 29, 229: sich erweiternder Bereich
- 31: Lichtaustrittsbereich
- 36: Lichtbereitstellungseinrichtung
- 45: Funktionsabschnitt (Lichtbereitstellungseinrichtung)
- 46: Basisabschnitt (Lichtbereitstellungseinrichtung)
- 47: Pende (Lichtbereitstellungseinrichtung)
- 48: Schwenkachse
- 49: Achse
- 55: Permanentmagnet
- 64: weiche Komponente
- 65: Unterseite (weiche Komponente)
- 66: durchbrochenes Teil
- 66a: Durchbrechung
- 67: Basisgehäusebauteil
- 68,69: Schraube
- 70: Schalenteil
- 71: Scheibe
- 72: Kühlkörper
- 72a: Ausnehmung
- 73: LED-Modul
- 74: Optik
- 75: Folie
- 76: Entblendring
- 78: Rücksprung
- 78a: Basisfläche (Rücksprung)
- 78b: Seitenfläche (Rücksprung)
- 80: Platine
- 81: LED
- 82: Körperabschnitt
- 85: Versorgungsleitung
- 85', 85", 85'": Versorgungsleitung
- 86: Leiter
- 87, 87'": Mantel
- 88: ringartiges Halteelement
- 89: Clip
- 89a: Halteabschnitt (Clip)
- 89b: Haftabschnitt (Clip)
- 90: magnetisches Band
- 91: Transformator
- A: Abstrahlrichtung
- L: Licht
- V: vertikale Richtung
- α: Ausstrahlwinkel

## Patentansprüche

1. Beleuchtungsanordnung (1; 101; 201), mit einem Gehäuse (3) mit einem Innenraum (5) und einem Lichtaustrittsbereich (31), und mit mindestens einer Lichtbereitstellungseinrichtung (36);
wobei das Gehäuse (3) ein Gehäuseteil (4) mit Decken- und Wandabschnitten (4a-e) sowie mit einem offenen Ende (4f) aufweist und das Gehäuse (3) ferner ein im Bereich des offenen Endes (4f) des Gehäuseteils (4) mit dem Gehäuseteil (4) gekoppeltes Element (6) aufweist, wobei das Element (6) mit dem Lichtaustrittsbereich (31) versehen ist, und wobei der Lichtaustrittsbereich (31) kleiner als das offene Ende (4f) des Gehäuseteils (4) ist;
wobei die Lichtbereitstellungseinrichtung (36) für ein Anordnen derselben innerhalb des Innenraums (5) zur Abgabe von Licht (L) im Betrieb durch den Lichtaustrittsbereich (31) nach außen ausgebildet ist;
wobei die Lichtbereitstellungseinrichtung (36) mit dem Gehäuse (3) koppelbar und mindestens innerhalb eines Bereichs des Innenraums (5) frei positionierbar ist, wobei die Lichtbereitstellungseinrichtung (36) mittels Magnetkraft mit dem Gehäuseteil (4) derart gekoppelt ist, dass die Lichtbereitstellungseinrichtung (36) gleitend an dem Gehäuseteil (4) verschiebbar und verdrehbar ist; und
wobei die Beleuchtungsanordnung (1; 101; 201) eine zur Versorgung der Lichtbereitstellungseinrichtung (36) vorgesehene Leitung (85) aufweist, wobei die Leitung (85) magnetisch mit einem Bestandteil des Gehäuses (3) gekoppelt und hierdurch innerhalb des Innenraums (5) gehalten und/oder geführt ist.

2. Beleuchtungsanordnung nach Anspruch 1,
**dadurch gekennzeichnet, dass** zur Befestigung der Lichtbereitstellungseinrichtung (36) am Gehäuse (3) an verschiedenen Orten innerhalb des Innenraums (5) die Lichtbereitstellungseinrichtung (36) mittels Magnetkraft mit einem Bestandteil des Gehäuses (3) koppelbar ist.

3. Beleuchtungsanordnung nach Anspruch 1 oder 2,
**dadurch gekennzeichnet, dass** die Lichtbereitstellungseinrichtung (36) für die Kopplung mit dem Gehäuse (3) an mindestens einem Innenoberflächenbereich (5a-e) des Gehäuses (3) magnetisch haftend befestigbar ist.

4. Beleuchtungsanordnung nach einem der vorstehenden Ansprüche,
**dadurch gekennzeichnet, dass** die Lichtbereitstellungseinrichtung (36) mindestens einen Magneten (55), insbesondere einen Permanentmagneten, aufweist, mittels dem die Kopplung der Lichtbereitstellungseinrichtung (36) mit dem Gehäuse (3) ermöglicht ist.

5. Beleuchtungsanordnung nach einem der vorstehenden Ansprüche,
**dadurch gekennzeichnet, dass** das Gehäuse (3) als ein Einbaugehäuse ausgebildet und derart eingerichtet ist, dass das Gehäuse (3) in eine hierfür vorgesehene Aussparung (10a) in einer Decke (10) einsetzbar und in der Aussparung befestigbar ist.

6. Beleuchtungsanordnung nach einem der vorstehenden Ansprüche,
**dadurch gekennzeichnet, dass** das Element (6) einen lichtundurchlässigen Körper (6a) aufweist, wobei der lichtundurchlässige Körper (6a) mit einem Ausschnitt (28) versehen ist, welcher den Lichtaustrittsbereich (31) bildet oder beinhaltet.

7. Beleuchtungsanordnung nach einem der vorstehenden Ansprüche,
**dadurch gekennzeichnet, dass** die Beleuchtungsanordnung (1; 101; 201) mehrere Lichtbereitstellungseinrichtungen (36) aufweist, wobei jede der Lichtbereitstellungseinrichtungen (36) mindestens innerhalb eines Bereichs des Innenraums (5) frei positionierbar ist.

8. Beleuchtungsanordnung nach einem der vorstehenden Ansprüche,
**dadurch gekennzeichnet, dass** die Lichtbereitstellungseinrichtung (36) eine weiche Komponente (64), insbesondere ein Filzelement, aufweist, welche beim Koppeln der Lichtbereitstellungseinrichtung (36) mit dem Gehäuse (3) in Kontakt mit dem Gehäuse (3) gelangt.

9. Beleuchtungsanordnung nach einem der vorstehenden Ansprüche,
**dadurch gekennzeichnet, dass** zusätzlich zu der freien Positionierbarkeit der Lichtbereitstellungseinrichtung (36) die Lichtbereitstellungseinrichtung (36) ferner ausrichtbar und/oder verstellbar ist, insbesondere zur Veränderung einer Abstrahlrichtung (A) der Lichtbereitstellungseinrichtung (36) nach Bedarf.

10. Beleuchtungsanordnung nach einem der vorstehenden Ansprüche,
**dadurch gekennzeichnet, dass** die Beleuchtungsanordnung (1; 101; 201) mindestens eine zusätzliche Lichtquelle (80, 81) aufweist, die dafür angeordnet und ausgebildet ist, um Licht in den Innenraum (5) abzugeben und insbesondere hierdurch das Gehäuse (3) zu hinterleuchten.

11. Beleuchtungsanordnung nach einem der vorstehenden Ansprüche,
**dadurch gekennzeichnet, dass** das Gehäuse (3) mit einem Durchgang (19) ausgestattet ist, der dafür eingerichtet ist, mindestens eine zur Versorgung der Lichtbereitstellungseinrichtung (36) dienende Leitung (85) aus dem Innenraum (5) herauszuführen, und die Beleuchtungsanordnung (1; 101; 201) eine Bürste (21) aufweist, deren Haare oder Fasern oder Borsten (25) in dem Durchgang (19) angeordnet sind und/oder den Durchgang (19) zumindest abschnittsweise überdecken.

12. Verfahren zum Aufbau einer Beleuchtungsanordnung (1; 101; 201) nach einem der vorstehenden Ansprüche, mit den Schritten:
- Bereitstellen eines Gehäuses (3) mit einem Innenraum (5) und einem Lichtaustrittsbereich (31), wobei das Gehäuse (3) ein Gehäuseteil (4) mit Decken- und Wandabschnitten (4a-e) sowie mit einem offenen Ende (4f) aufweist und das Gehäuse (3) ferner ein im Bereich des offenen Endes (4f) des Gehäuseteils (4) mit dem Gehäuseteil (4) gekoppeltes Element (6) aufweist, wobei das Element (6) mit dem Lichtaustrittsbereich (31) versehen ist, und wobei der Lichtaustrittsbereich (31) kleiner als das offene Ende (4f) des Gehäuseteils (4) ist, und Bereitstellen mindestens einer Lichtbereitstellungseinrichtung (36);
- Einbringen der Lichtbereitstellungseinrichtung (36) in den Innenraum (5) und Koppeln der Lichtbereitstellungseinrichtung (36) mit dem Gehäuse (3), um die Lichtbereitstellungseinrichtung (36) innerhalb des Innenraums (5) zu halten, wobei die Lichtbereitstellungseinrichtung (36) mittels Magnetkraft mit dem Gehäuseteil (4) derart gekoppelt wird, dass die Lichtbereitstellungseinrichtung (36) gleitend an dem Gehäuseteil (4) verschiebbar und verdrehbar ist; und
- Positionieren der Lichtbereitstellungseinrichtung (36) in der Weise, dass die Lichtbereitstellungseinrichtung (36), bei Bedarf nach zusätzlichem Ausrichten derselben, im Betrieb Licht (L) durch den Lichtaustrittsbereich (31) nach außen abgeben kann;
wobei das Verfahren ferner ein Anordnen einer zur Versorgung der Lichtbereitstellungseinrichtung (36) vorgesehenen Leitung (85) innerhalb des Innenraums (5) und ein magnetisches Koppeln der Leitung (85) mit einem Bestandteil des Gehäuses (3) zum Halten der Leitung (85) innerhalb des Gehäuses (3) umfasst.

13. Verfahren nach Anspruch 12,
**dadurch gekennzeichnet, dass** das Verfahren ferner ein Justieren der Lichtbereitstellungseinrichtung (36) durch gleitendes Verschieben und/oder Verdrehen der Lichtbereitstellungseinrichtung (36) an dem Gehäuse (3) umfasst.

14. Verfahren nach Anspruch 12 oder 13,
**dadurch gekennzeichnet, dass** das Einbringen der Lichtbereitstellungseinrichtung (36) in den Innenraum (5), das Koppeln derselben mit dem Gehäuse (3), sowie das Positionieren der Lichtbereitstellungseinrichtung (36), durch einen Ausschnitt (28), der den Lichtaustrittsbereich (31) bildet oder beinhaltet, hindurch erfolgt, insbesondere nachdem das Gehäuse (3) im Bereich einer Decke (10) montiert ist.

15. Beleuchtungsanordnung (1; 101; 201), mit einem Gehäuse (3) mit einem Innenraum (5) und einem Lichtaustrittsbereich (31), und mit mindestens einer Lichtbereitstellungseinrichtung (36),
wobei die Lichtbereitstellungseinrichtung (36) für ein Anordnen derselben innerhalb des Innenraums (5) zur Abgabe von Licht (L) im Betrieb durch den Lichtaustrittsbereich (31) nach außen ausgebildet ist, und
wobei die Lichtbereitstellungseinrichtung (36) mit dem Gehäuse (3) koppelbar und mindestens innerhalb eines Bereichs des Innenraums (5) frei positionierbar ist; wobei die Beleuchtungsanordnung (1; 101; 201) eine zur Versorgung der Lichtbereitstellungseinrichtung (36) vorgesehene Leitung (85) aufweist, wobei die Leitung (85) derart ausgebildet ist, dass sie magnetisch mit einem Bestandteil des Gehäuses (3) gekoppelt und hierdurch innerhalb des Innenraums (5) gehalten und/oder geführt ist; wobei das Gehäuse (3) einen Durchgang (19) aufweist, der für ein Hindurchführen mindestens der zur Versorgung der Lichtbereitstellungseinrichtung (36) dienenden Leitung (85) durch den Durchgang (19) aus dem Innenraum (5) heraus eingerichtet ist, und
wobei die Beleuchtungsanordnung (1; 101; 201) ferner mindestens eine Bürste (21) aufweist, die mit Haaren oder Fasern oder Borsten (25) versehen ist, welche in dem Durchgang (19) angeordnet sind und/oder den Durchgang (19) zumindest abschnittsweise überdecken.

## Claims

1. Lighting assembly (1; 101; 201) comprising a housing (3) with an interior (5) and a light emitting region (31), and with at least one lighting device (36);
wherein the housing (3) has a housing part (4) with ceiling and wall portions (4a-e) and an open end (4f) and the housing (3) also has an element (6) coupled to the housing part (4) in the region of the open end (4f) of said housing part (4), this element (6) being provided with the light emitting region (31) which is smaller than the open end (4f) of the housing part (4);
wherein the lighting device (36) is provided for an arrangement inside the interior (5) for emitting light (L) to the exterior via the light emitting region (31) during operation;
wherein the lighting device (36) can be coupled to the housing (3) and can be freely positioned at least inside a region of the interior (5), with the lighting device (36) coupled by magnetic force to the housing part (4) such that the lighting device (36) is slidingly displaceable and rotatable on the housing part (4); and wherein the lighting assembly (1; 101; 201) has a cable (85) for supplying the lighting device (36), the cable (85) being magnetically coupled to a component of the housing (3) and by this means being held and/or guided inside the interior (5) .

2. Lighting assembly according to claim 1,
**characterised in that** the lighting device (36) can be coupled by magnetic force to a component of the housing (3) at various places inside the interior (5) in order to fix said lighting device (36) to the housing (3).

3. Lighting assembly according to claim 1 or 2,
**characterised in that** for coupling to the housing (3) the lighting device (36) can be fixed to magnetically adhere to at least one interior surface region (5a-e) of the housing (3) .

4. Lighting assembly according to any one of the preceding claims,
**characterised in that** the lighting device (36) has at least one magnet (55), in particular a permanent magnet, by means of which it is possible to couple the lighting device (36) to the housing (3).

5. Lighting assembly according to any one of the preceding claims,
**characterised in that** the housing (3) is a built-in housing in design and is constructed such that the housing (3) can be placed into a recess (10a) provided for it in a ceiling (10) and can be fixed in said recess.

6. Lighting assembly according to any one of the preceding claims,
**characterised in that** the element (6) has a non-translucent body (6a) which is provided with a cut-out (28) which forms or contains the light emitting region (31).

7. Lighting assembly according to any one of the preceding claims,
**characterised in that** the lighting assembly (1; 101; 201) has a plurality of lighting devices (36), each of which can be freely positioned at least in a region of the interior (5) .

8. Lighting assembly according to any one of the preceding claims,
**characterised in that** the lighting device (36) has a soft component (64), in particular a felt element, which comes into contact with the housing (3) when the lighting device (36) is coupled to said housing (3).

9. Lighting assembly according to any one of the preceding claims,
**characterised in that**, in addition the ability to position the lighting device (36) freely, the lighting device (36) is also alignable and/or adjustable, in particular for altering the direction of the beam (A) of the lighting device (36) as required.

10. Lighting assembly according to any one of the preceding claims,
**characterised in that** the lighting assembly (1; 101; 201) has at least one additional light source (80, 81) which is arranged and constructed to emit light to the interior (5) and in particular to backlight the housing (3) by this means.

11. Lighting assembly according to any one of the preceding claims,
**characterised in that** the housing (3) is provided with an opening (19) which is constructed to guide at least one cable (85) out of the interior (5) for supplying the lighting device (36), and the lighting assembly (1; 101; 201) has a brush (21) whose hairs or fibres or bristles (25) are arranged in the opening (19) and/or cover the opening (19) at least section-wise.

12. Method of constructing a lighting assembly (1; 101; 201) according to any one of the preceding claims, comprising the steps:
- provision of a housing (3) with an interior (5) and a light emitting region (31), wherein the housing (3) has a housing part (4) with ceiling and wall portions (4a-e) and an open end (4f), and the housing (3) also has an element (6) coupled to the housing part (4) in the region of the open end (4f) of said housing part (4), this element (6) being provided with the light emitting region (31) which is smaller than the open end (4f) of the housing part (4), and provision of at least one lighting device (36);
- insertion of the lighting device (36) into the interior (5) and coupling of the lighting device (36) to the housing (3) in order to hold the lighting device (36) inside the interior (5), the lighting device (36) being coupled by magnetic force to the housing part (4) so as to be slidingly displaceable and rotatable on the housing part (4); and
- positioning of the lighting device (36) in such a manner that when in operation the lighting device (36), if necessary after additional alignment of the same, is able to emit light (L) to the exterior via the light emitting region (31);
wherein the method also comprises an arrangement of a cable (85) inside the interior (5) for supplying the lighting device (36) and a magnetic coupling of the cable (85) to a component of the housing (3) for holding the cable (85) inside the housing (3).

13. Method according to claim 12,
**characterised in that** the method also comprises an adjustment of the lighting device (36) by means of sliding displacement and/or rotation of the lighting device (36) on the housing (3).

14. Method according to claim 12 or 13,
**characterised in that** the insertion of the lighting device (36) into the interior (5), the coupling thereof to the housing (3), and the positioning of the lighting device (36), through a cut-out (28) which forms or contains the light emitting region (31), is achieved in particular after the housing (3) has been mounted in the region of a ceiling (10) .

15. Lighting assembly (1; 101; 201) comprising a housing (3) with an interior (5) and a light emitting region (31), and with at least one lighting device (36),
wherein said lighting device (36) is provided for an arrangement thereof inside the interior (5) for emitting light (L) to the exterior via the light emitting region (31) during operation, and
wherein the lighting device (36) can be coupled to the housing (3) and can be positioned freely at least inside a region of the interior (5);
wherein the lighting assembly (1; 101; 201) has a cable (85) for supplying the lighting device (36), said cable (85) being constructed such that it is coupled magnetically to a component of the housing (3) and by this means is held and/or guided inside the interior (5);
wherein the housing (3) has an opening (19) provided for guiding at least the cable (85) through the opening (19) from the interior (5) in order to supply the lighting device (36), and
wherein the lighting assembly (1; 101; 201) also has at least one brush (21) which is provided with hairs or fibres or bristles (25), which are arranged in the opening (19) or cover the opening (19) at least section-wise.

## Revendications

1. Agencement d'éclairage (1 ; 101 ; 201) doté d'un boîtier (3) avec un espace intérieur (5) et une zone d'émission lumineuse (31), et doté d'au moins un dispositif fournisseur de lumière (36) ;
dans lequel le boîtier (3) comporte une partie de boîtier (4) avec des sections de couvercle et de paroi (4a-e) ainsi qu'avec une extrémité ouverte (4f) et le boîtier (3) comporte en outre un élément (6) accouplé avec la partie de boîtier (4) dans la zone de l'extrémité ouverte (4f) de la partie de boîtier (4), dans lequel l'élément (6) est prévu avec la zone d'émission lumineuse (31), et dans lequel la zone d'émission lumineuse (31) est plus petite que l'extrémité ouverte (4f) de la partie de boîtier (4) ;
dans lequel le dispositif fournisseur de lumière (36) est conçu pour être agencé dans l'espace intérieur (5) afin d'émettre en opération de la lumière (L) vers l'extérieur au travers de la zone d'émission lumineuse (31) ;
dans lequel le dispositif fournisseur de lumière (36) est accouplable avec le boîtier (3) et est librement positionnable au sein d'une zone de l'espace intérieur (5), dans lequel le dispositif fournisseur de lumière (36) est accouplé magnétiquement à la partie de boîtier de telle sorte que le dispositif fournisseur de lumière (36) peut glisser pour coulisser et tourner sur la partie de boîtier ; et
dans lequel l'agencement d'éclairage (1 ; 101 ; 201) comporte un conducteur (85) prévu pour l'alimentation du dispositif fournisseur de lumière (36), dans lequel le conducteur (85) est accouplé magnétiquement avec une pièce du boîtier (3) et est ainsi maintenu et/ou guidé au sein de l'espace intérieur (5).

2. Agencement d'éclairage selon la revendication 1,
**caractérisé en ce que** pour la fixation du dispositif fournisseur de lumière (36) au boîtier, le dispositif fournisseur de lumière (36) est accouplable magnétiquement à une pièce du boîtier (3) à différents endroits au sein de l'espace intérieur (5).

3. Agencement d'éclairage selon la revendication 1 ou 2,
**caractérisé en ce que**, pour l'accouplement avec le boîtier (3), le dispositif fournisseur de lumière (36) peut être fixé magnétiquement à au moins une zone de surface interne (5a-e) du boîtier (3).

4. Agencement d'éclairage selon l'une des revendications précédentes,
**caractérisé en ce que** le dispositif fournisseur de lumière (36) comporte au moins un aimant (55), en particulier un aimant permanent, au moyen duquel l'accouplement du dispositif fournisseur de lumière (36) au boîtier (3) est rendu possible.

5. Agencement d'éclairage selon l'une des revendications précédentes,
**caractérisé en ce que** le boîtier (3) est conçu comme un boîtier d'encastrement et arrangé de telle sorte que le boîtier (3) peut être inséré dans une cavité (10a) prévue à cet effet dans un plafond (10) et peut être fixé dans la cavité.

6. Agencement d'éclairage selon l'une des revendications précédentes,
**caractérisé en ce que** l'élément (6) comporte un corps opaque (6a), dans lequel le corps opaque (6a) est prévu avec une échancrure (28), laquelle forme ou contient la zone d'émission lumineuse (31).

7. Agencement d'éclairage selon l'une des revendications précédentes,
**caractérisé en ce que** l'agencement d'éclairage (1 ; 101 ; 201) comporte plusieurs dispositifs fournisseurs de lumière (36), dans lequel chacun des dispositifs fournisseurs de lumière (36) est librement positionnable au moins au sein d'une zone de l'espace intérieur (5).

8. Agencement d'éclairage selon l'une des revendications précédentes,
**caractérisé en ce que** le dispositif fournisseur de lumière (36) comporte un composant mou (64), en particulier un élément de feutre, lequel entre en contact avec le boîtier (3) lors de l'accouplement du dispositif fournisseur de lumière (36) avec le boîtier (3).

9. Agencement d'éclairage selon l'une des revendications précédentes,
**caractérisé en ce qu'**outre la possibilité de positionnement libre du dispositif fournisseur de lumière (36), celui-ci (36) est en outre orientable et/ou réglable, en particulier afin de modifier une direction de rayonnement (A) du dispositif fournisseur de lumière (36) selon les besoins.

10. Agencement d'éclairage selon l'une des revendications précédentes,
**caractérisé en ce que** l'agencement d'éclairage (1 ; 101 ; 201) comporte au moins une source de lumière supplémentaire (80, 81), laquelle est conçue et agencée afin de produire de la lumière dans l'espace intérieur (5) et en particulier de rétroéclairer ainsi le boîtier (3).

11. Agencement d'éclairage selon l'une des revendications précédentes, **caractérisé en ce que** le boîtier (3) est pourvu d'un passage (19), qui est disposé de façon à faire sortir de l'espace intérieur (5) au moins un conducteur (85) servant à alimenter le dispositif fournisseur de lumière (36), et l'agencement d'éclairage (1 ; 101 ; 201) comporte une brosse (21), dont les poils ou les fibres ou les soies (25) sont agencés dans le passage (19) et/ou recouvrent au moins partiellement le passage (19).

12. Procédé de construction d'un l'agencement d'éclairage (1 ; 101 ; 201) selon l'une des revendications précédentes, avec les étapes :
- préparation d'un boîtier (3) doté d'un espace intérieur (5) et d'une zone d'émission lumineuse (31), dans lequel le boîtier (3) comporte une partie de boîtier (4) avec des sections de couvercle et de paroi (4a-e) ainsi qu'avec une extrémité ouverte (4f) et le boîtier (3) comporte en outre un élément (6) accouplé avec la partie de boîtier (4) dans la zone de l'extrémité ouverte (4f) de la partie de boîtier (4), dans lequel l'élément (6) est prévu avec la zone d'émission lumineuse (31), et dans lequel la zone d'émission lumineuse (31) est plus petite que l'extrémité ouverte (4f) de la partie de boîtier (4), et préparation d'au moins un dispositif fournisseur de lumière (36) ;
- introduction du dispositif fournisseur de lumière (36) dans l'espace intérieur (5) et accouplement du dispositif fournisseur de lumière (36) avec le boîtier (3) afin de maintenir le dispositif fournisseur de lumière (36) au sein de l'espace intérieur (5), dans lequel le dispositif fournisseur de lumière (36) est accouplé magnétiquement à la partie de boîtier de telle sorte que le dispositif fournisseur de lumière (36) peut glisser pour coulisser et tourner sur la partie de boîtier ; et
- positionnement du dispositif fournisseur de lumière (36) de manière à ce que le dispositif fournisseur de lumière (36) puisse émettre, en opération, si besoin après orientation additionnelle de celui-ci, de la lumière (L) vers l'extérieur au travers de la zone d'émission lumineuse (31) ;
dans lequel le procédé comprend en outre l'agencement au sein de l'espace intérieur (5) d'un conducteur (85) prévu pour l'alimentation du dispositif fournisseur de lumière (36) et un accouplement magnétique du conducteur (85) avec une pièce du boîtier (3) afin de maintenir le conducteur (85) au sein du boîtier (3).

13. Procédé selon la revendication 12, **caractérisé en ce que** le procédé comprend en outre un ajustement du dispositif fournisseur de lumière (36) par coulissement et/ou rotation, de manière glissante, du dispositif fournisseur de lumière (36) sur le boîtier (3).

14. Procédé selon la revendication 12 ou 13, **caractérisé en ce que** l'introduction du dispositif fournisseur de lumière (36) dans l'espace intérieur (5), l'accouplement de celui-ci avec le boîtier (3), ainsi que le positionnement du dispositif fournisseur de lumière (36) s'effectuent par une échancrure (28) formée ou contenue par la zone d'émission lumineuse (31), en particulier après que le boîtier (3) a été monté dans la zone d'un plafond (10).

15. Agencement d'éclairage (1 ; 101 ; 201) doté d'un boîtier (3) avec un espace intérieur (5) et une zone d'émission lumineuse (31), et doté d'au moins un dispositif fournisseur de lumière (36),
dans lequel le dispositif fournisseur de lumière (36) est conçu pour être agencé dans l'espace intérieur (5) afin d'émettre en opération de la lumière (L) vers l'extérieur au travers de la zone d'émission lumineuse (31), et
dans lequel le dispositif fournisseur de lumière (36) est accouplable avec le boîtier (3) et est librement positionnable au moins au sein d'une zone de l'espace intérieur (5); dans lequel l'agencement d'éclairage (1 ; 101 ; 201) comporte un conducteur (85) prévu pour l'alimentation du dispositif fournisseur de lumière (36), dans lequel le conducteur (85) est conçu de telle sorte qu'il est accouplé magnétiquement avec une pièce du boîtier (3) et est ainsi maintenu et/ou guidé au sein de l'espace intérieur (5) ;
dans lequel le boîtier (3) est pourvu d'un passage (19), qui est disposé pour un guidage de l'au moins un conducteur (85) servant à alimenter le dispositif fournisseur de lumière (36) hors de l'espace intérieur (5) au travers du passage (19), et
dans lequel l'agencement d'éclairage (1 ; 101 ; 201) comporte en outre au moins une brosse (21), laquelle est prévue dotée de poils ou de fibres ou de soies (25), qui sont agencés dans le passage (19) et/ou recouvrent au moins partiellement le passage (19).
